# EUROPEAN PATENT APPLICATION

(11) **EP 4 811 754 A1**
(43) Date of publication of application: **23.09.2026**
(21) Application number: 24913492.5
(22) Date of filing: 02.12.2024
(51) Int. Cl.: H04M 1/02, H01Q 1/24, H04B 1/40

(54) **ANTENNA AND ELECTRONIC DEVICE COMPRISING SAME**

(30) Priority: 26.12.2023 KR 20230191313; 30.01.2024 KR 20240013915
(71) Applicant: Samsung Electronics Co., Ltd., Suwon-si, Gyeonggi-do 16677 (KR)
(72) Inventor: SEO, Mincheol, Suwon-si, Gyeonggi-do 16677 (KR); KANG, Woosuk, Suwon-si, Gyeonggi-do 16677 (KR); KWON, Ohheon, Suwon-si, Gyeonggi-do 16677 (KR); KIM, Sunryul, Suwon-si, Gyeonggi-do 16677 (KR); KIM, Seunghwan, Suwon-si, Gyeonggi-do 16677 (KR); YU, Changha, Suwon-si, Gyeonggi-do 16677 (KR); LEE, Sangmok, Suwon-si, Gyeonggi-do 16677 (KR); CHUN, Jaebong, Suwon-si, Gyeonggi-do 16677 (KR)
(74) Representative: HGF
(86) International application number: PCT/KR2024/019457
(87) International publication number: WO 2025/143599

(57) **Abstract**

According to various embodiments, an electronic device may comprise: a housing including at least one conductive portion configured to form at least a part of a side surface thereof; a display disposed to be visible from the outside through at least a part of the housing, the display comprising a display panel, an extension portion extending from the display panel while being positioned to correspond to the at least one conductive portion and disposed to be folded onto the back surface of the display, and a display control circuit disposed on the extension portion; a molding member disposed to cover at least a part of the extension portion; and a wireless communication circuit configured to transmit or receive radio signals through the at least one conductive portion. The molding member may be disposed to be spaced apart from the at least one conductive portion.

## Description

### [Technical Field]

Embodiments of the disclosure relate to an antenna and an electronic device including the same.

### [Background Art]

As the functional gap among electronic devices of respective manufacturers decreases, electronic devices are becoming increasingly slimmer to satisfy consumers' desire to purchase, and are being developed to increase rigidity of the electronic devices, strengthen design aspects, and differentiate functional elements thereof at the same time. An electronic device may include at least one antenna, which is to be provided for communication among components of the electronic device. The at least one antenna may be implemented through a metal bezel (e.g., a side surface member) used as a part of a housing of the electronic device, and may need to be improved in order to enhance radiation performance.

The above information may be provided as related art for the purpose of facilitating an understanding of the disclosure. No claim or determination is made as to whether any of the foregoing constitutes prior art related to the disclosure.

### [Disclosure of Invention]

### [Technical Problem]

An electronic device may include at least one housing (e.g., a housing structure) including a space for accommodating electronic components. The housing may include a side surface member used as at least a portion of a side surface of the electronic device. The side surface member may be formed at least partially of a metal material (e.g., a conductive member, a conductive portion, or a conductive material) to reinforce rigidity of the electronic device and/or perform a specific function (e.g., an antenna function), and a remaining portion may be formed of a polymer (e.g., a non-conductive member, a non-conductive portion, or a non-conductive material) coupled to the metal material. For example, the side surface member may include at least one conductive portion physically segmented through at least one non-conductive portion (e.g., a segmentation portion). The at least one conductive portion may be electrically connected to a wireless communication circuit of the electronic device, so that the at least one conductive portion may operate as at least one antenna operating in at least one frequency band.

Meanwhile, in order to implement a large-screen display relative to a size of the electronic device, it may be necessary to reduce a bezel region. As a part of such a method, a method may be considered in which the display includes a molding member disposed to cover an edge (e.g., an edge region) of a display panel, and the molding member extends inward from a side surface member and is attached, via an adhesive member, to an extension member supporting at least a portion of the display.

However, in such an arrangement structure, the molding member and/or a leaked adhesive member may be close to or in contact with a conductive portion used as an antenna, and the molding member and/or the adhesive member may act as a coupling element with a conductive structure of the display (e.g., a chip on plastic (COP) or a Cu sheet), thereby reducing radiation performance of the antenna.

Embodiments of the disclosure may provide an antenna and an electronic device including the same, which may help improve performance of the antenna.

Embodiments of the disclosure may provide an antenna and an electronic device including the same, which may help implement a large-screen display while maintaining performance of the antenna.

However, the problems to be solved in the disclosure are not limited to the above-mentioned problems, and may be variously expanded without departing from the spirit and scope of the disclosure.

### [Solution to Problem]

According to various embodiments, an electronic device may include a housing including at least one conductive portion forming at least a portion of a side surface, and a display disposed to be visible from outside through at least a portion of the housing. The display may include a display panel, an extension portion extending from the display panel at a position corresponding to the at least one conductive portion and disposed to be folded toward a rear surface of the display, and display a control circuit disposed on the extension portion. The electronic device may further include a molding member disposed to cover at least a portion of the extension portion, and a wireless communication circuit configured to transmit or receive a wireless signal through the at least one conductive portion. The molding member may be disposed to be spaced apart from the at least one conductive portion.

According to various embodiments, an electronic device may include a housing including at least one conductive portion forming at least a portion of a side surface, a display disposed to be visible from outside through at least a portion of the housing and including a display panel and a conductive sheet disposed below the display panel, a molding member disposed to cover an edge of the display, and a wireless communication circuit configured to transmit or receive a wireless signal through the at least one conductive portion. The molding member may be disposed to be spaced apart from the at least one conductive portion.

### [Advantageous Effects of Invention]

According to exemplary embodiments of the disclosure, the electronic device may have an arrangement structure in which a conductive portion of a side surface member used as an antenna and a molding member covering an edge of a display are spaced apart from each other by a predetermined distance, thereby reducing a coupling effect through the molding member or an adhesive member and helping improve radiation performance of the antenna.

In addition, various effects directly or indirectly identified through this document may be provided.

The effects obtainable in the disclosure are not limited to the above-mentioned effects, and other effects not mentioned above will be clearly understood by a person having ordinary skill in the art to which the disclosure pertains from the following description.

### [Brief Description of Drawings]

In the description based on the drawings, the same or similar reference numerals may be used for the same or similar components.
FIG. 1 is a block diagram of an electronic device in a network environment according to various embodiments of the disclosure.
FIG. 2A is a front perspective view of an electronic device according to various embodiments of the disclosure.
FIG 2B is a rear perspective view of the electronic device of FIG. 1 according to various embodiments of the disclosure.
FIG. 3 is an exploded perspective view of the electronic device of FIG. 1 according to various embodiments of the disclosure.
FIG. 4 illustrates a configuration of a side surface member according to various embodiments of the disclosure.
FIG. 5A is an exploded perspective view illustrating a stacked structure of a display according to various embodiments of the disclosure.
FIG. 5B is a view illustrating a rear surface of a display according to various embodiments of the disclosure.
FIGS. 6A and 6B are schematic views illustrating a process of applying a molding member to a display according to various embodiments of the disclosure.
FIG. 7 is a partial cross-sectional view of an electronic device according to various embodiments of the disclosure taken along line 7-7 of FIG. 2A.
FIG. 8 illustrates graphs comparing radiation characteristics of an antenna according to a distance between the cutting portion and the molding member according to various embodiments of the disclosure.
FIG. 9A is a partial cross-sectional view of an electronic device according to various embodiments of the disclosure.
FIG. 9B is a partial cross-sectional view of an electronic device according to various embodiments of the disclosure.
FIG. 10 illustrates graphs comparing radiation characteristics of an antenna according to a distance between the inner surface of the conductive portion and the molding member according to various embodiments of the disclosure.
FIG. 11A is a view schematically illustrating a distance arrangement between a conductive portion and a molding member according to various embodiments of the disclosure.
FIG. 11B is a view illustrating a current distribution of a conductive portion used as an antenna according to various embodiments of the disclosure.
FIG. 11C is a view schematically illustrating a distance arrangement between a conductive portion and a molding member according to various embodiments of the disclosure.
FIGS. 12A to 12C are views each schematically illustrating a distance arrangement between a conductive portion and a molding member according to various embodiments of the disclosure.
FIG. 13 is a view illustrating a rear surface of a display according to various embodiments of the disclosure.
FIGS. 14A to 14D are views each illustrating a configuration of the molding member of FIG. 13 according to antenna arrangements according to various embodiments of the disclosure.
FIG. 15A is a perspective view of an electronic device according to various embodiments of the disclosure.
FIG. 15B is a view illustrating a configuration of an electronic device including conductive portions used as an antenna according to various embodiments of the disclosure.
FIG. 15C is a view illustrating a rear surface of the flexible display of FIG. 15A according to various embodiments of the disclosure.
FIG. 16A is a view illustrating a configuration of an electronic device according to various embodiments of the disclosure.
FIG. 16B is a cross-sectional view of an electronic device according to various embodiments of the disclosure taken along line 16b-16b of FIG. 16A.

### [Mode for Invention]

The following description with reference to the accompanying drawings is provided to assist in a comprehensive understanding of various embodiments of the disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the disclosure. In addition, descriptions of well-known functions and constructions may be omitted for clarity and conciseness.

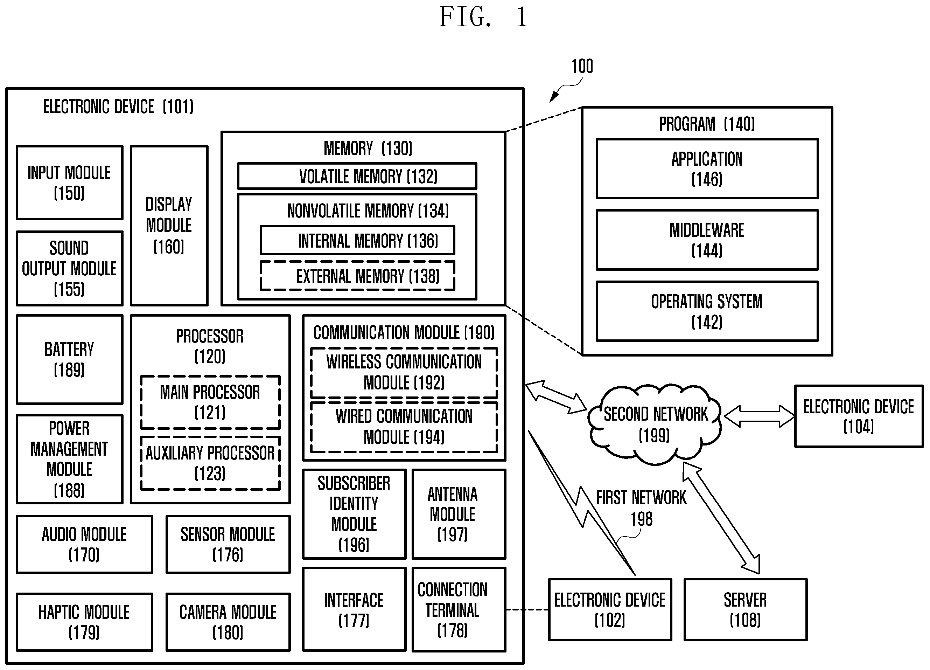

FIG. 1 is a block diagram illustrating an example electronic device 101 in a network environment 100 according to an embodiment of the disclosure.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In various embodiments, at least one of the components (e.g., the connecting terminal 178) may be omitted from the electronic device 101, or one or more other components may be added in the electronic device 101. In various embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or 450
a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a fifth generation (5G) network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a fourth generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the millimeter wave (mmWave) band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

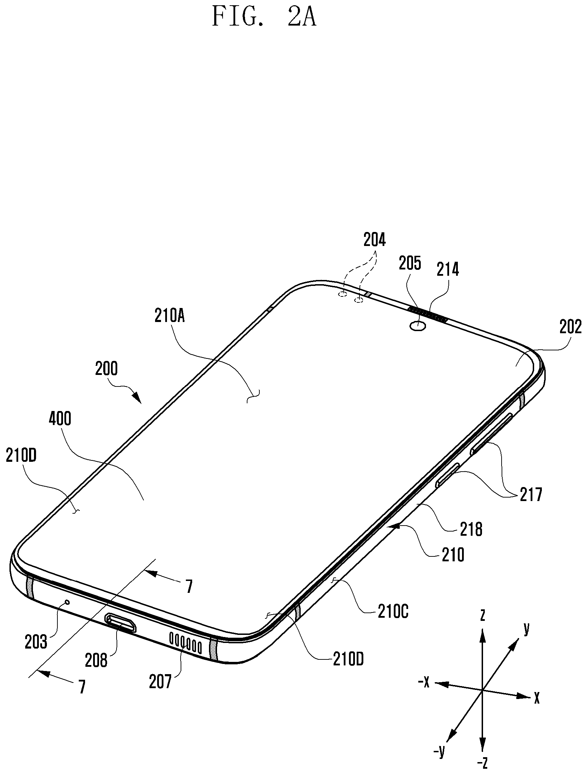

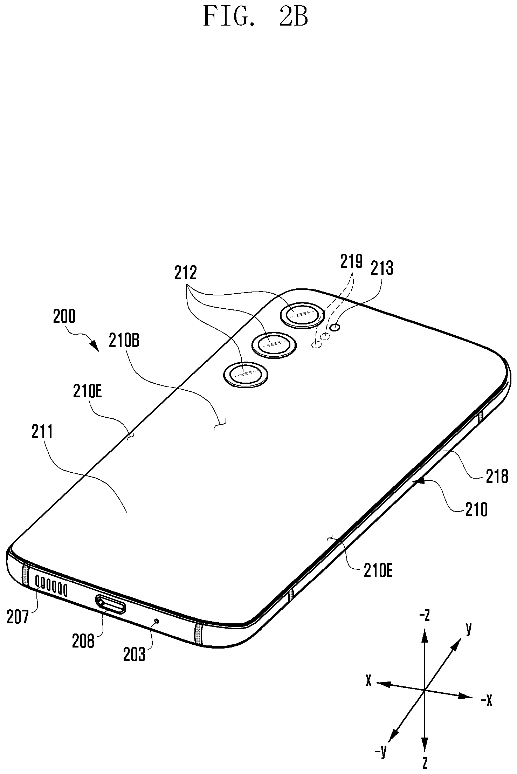

FIG. 2A illustrates a perspective view showing a front surface of a mobile electronic device according to an embodiment of the disclosure.FIG. 2B illustrates a perspective view showing a rear surface of the mobile electronic device shown in FIG. 2A according to an embodiment of the disclosure.

Mobile electronic device 200 in FIGS. 2A and 2B may be at least partially similar to the electronic device 101 in FIG. 1 or may further include other embodiments.

Referring to FIGS. 2A and 2B, a mobile electronic device 200 may include a housing 210 that includes a first surface (or front surface) 210A, a second surface (or rear surface) 210B, and a lateral surface 210C that surrounds a space between the first surface 210A and the second surface 210B. The housing 210 may refer to a structure that forms a part of the first surface 210A, the second surface 210B, and the lateral surface 210C. The first surface 210A may be formed of a front plate 202 (e.g., a glass plate or polymer plate coated with a variety of coating layers) at least a part of which is substantially transparent. The second surface 210B may be formed of a rear plate 211 which is substantially opaque. The rear plate 211 may be formed of, for example, coated or colored glass, ceramic, polymer, metal (e.g., aluminum, stainless steel (STS), or magnesium), or any combination thereof. The lateral surface 210C may be formed of a lateral bezel structure (or "lateral member") 218 which is combined with the front plate 202 and the rear plate 211 and includes a metal and/or polymer. The rear plate 211 and the lateral bezel structure 218 may be integrally formed and may be of the same material (e.g., a metallic material such as aluminum).

The front plate 202 may include two first regions 210D disposed at long edges thereof, respectively, and bent and extended seamlessly from the first surface 210A toward the rear plate 211. Similarly, the rear plate 211 may include two second regions 210E disposed at long edges thereof, respectively, and bent and extended seamlessly from the second surface 210B toward the front plate 202. The front plate 202 (or the rear plate 211) may include only one of the first regions 210D (or of the second regions 210E). The first regions 210D or the second regions 210E may be omitted in part. When viewed from a lateral side of the mobile electronic device 200, the lateral bezel structure 218 may have a first thickness (or width) on a lateral side where the first region 210D or the second region 210E is not included, and may have a second thickness, being less than the first thickness, on another lateral side where the first region 210D or the second region 210E is included.

The mobile electronic device 200 may include at least one of a display 400, audio modules 203, 207, and 214, sensor modules 204 and 219, camera modules 205, 212 and 213, a key input device 217, a light emitting device, and connector holes 208 and 209. The mobile electronic device 200 may omit at least one (e.g., the key input device 217 or the light emitting device) of the above components, or may further include other components.

The display 400 may be exposed through a substantial portion of the front plate 202, for example. At least a part of the display 400 may be exposed through the front plate 202 that forms the first surface 210A and the first region 210D of the lateral surface 210C. The display 400 may be combined with, or adjacent to, a touch sensing circuit, a pressure sensor capable of measuring the touch strength (pressure), and/or a digitizer for detecting a stylus pen. At least a part of the sensor modules 204 and 219 and/or at least a part of the key input device 217 may be disposed in the first region 210D and/or the second region 210E.

According to certain embodiments, the audio module 203 may include at least one microphone. In certain embodiments, the audio module 203 may include a plurality of microphones disposed to detect the direction of a sound. According to an embodiment, the sound output devices (e.g., audio modules 203, 207, 214) may include speakers. According to an embodiment, the audio module 203 may include a receiver for calls disposed in the first housing 210, and a speaker. In certain embodiments, the audio module 203, the sound output devices (e.g., audio modules 207 and 214), and the connector port (e.g., connector hole 208) may be disposed in a space arranged in the first housing 210 and/or the second housing 220 of the mobile electronic device 200, and may be exposed to the external environment through at least one hole formed in the first housing 210 and/or the second housing 220. In certain embodiments, the sound output devices (e.g., audio modules 203, 207, 214) may include a speaker (e.g., piezo speaker) that operates without using a hole formed in the first housing 210 and/or the second housing 220.

The sensor modules 204 and 219 may generate electrical signals or data corresponding to an internal operating state of the mobile electronic device 200 or to an external environmental condition. The sensor modules 204 and 219 may include a first sensor module 204 (e.g., a proximity sensor) and/or a second sensor module (e.g., a fingerprint sensor) disposed on the first surface 210A of the housing 210, and/or a third sensor module 219 (e.g., a heart rate monitor (HRM) sensor) and/or a fourth sensor module (e.g., a fingerprint sensor) disposed on the second surface 210B of the housing 210. The fingerprint sensor may be disposed on the second surface 210B as well as the first surface 210A (e.g., the display 400) of the housing 210. The mobile electronic device 200 may further include at least one of a gesture sensor, a gyro sensor, an air pressure sensor, a magnetic sensor, an acceleration sensor, a grip sensor, a color sensor, an infrared (IR) sensor, a biometric sensor, a temperature sensor, a humidity sensor, or an illuminance sensor.

The camera modules 205, 212 and 213 may include a first camera device 205 disposed on the first surface 210A of the mobile electronic device 200, and a second camera device 212 and/or a flash 213 disposed on the second surface 210B. The camera module 205 or the camera module 212 may include one or more lenses, an image sensor, and/or an image signal processor. The flash 213 may include, for example, a light emitting diode or a xenon lamp. Two or more lenses (infrared cameras, wide angle and telephoto lenses) and image sensors may be disposed on one side of the mobile electronic device 200.

The key input device 217 may be disposed on the lateral surface 210C of the housing 210. The mobile electronic device 200 may not include some or all of the key input device 217 described above, and the key input device 217 which is not included may be implemented in another form such as a soft key on the display 400. The key input device 217 may include the sensor module disposed on the second surface 210B of the housing 210.

The indicator may be disposed on the first surface 210A of the housing 210. For example, the light emitting device may provide status information of the mobile electronic device 200 in an optical form. The light emitting device may provide a light source associated with the operation of the camera module 205. The light emitting device may include, for example, a light emitting diode (LED), an IR LED, or a xenon lamp.

The connector holes 208 may include a first connector hole 208 adapted for a connector (e.g., a USB connector) for transmitting and receiving power and/or data to and from an external electronic device, and/or a second connector hole 209 adapted for a connector (e.g., an earphone jack) for transmitting and receiving an audio signal to and from an external electronic device.

Some camera modules of camera modules 205 and 212, some sensor modules of sensor modules 204 and 219, or an indicator may be arranged to be exposed through the display 400. For example, the camera module 205, the sensor module 204, or the indicator may be arranged in the internal space of an electronic device (e.g., mobile electronic device 200) so as to be brought into contact with an external environment through an opening of the display 400, which is perforated up to the front plate 202. According to an embodiment, an area corresponding to some camera module 105 of the display 400 is a part of an area in which content is displayed, and may be formed as a transmission area having designated transmittance. For example, the transmission area may be formed to have transmittance having a range of about 5% to about 20%. For example, a transmission area of the display 400 may include an area in which the density of pixels and/or a wiring density are lower than that of surroundings.The camera module 205 may include, for example, under display camera (UDC). In another embodiment, some sensor modules 204 may be arranged to perform their functions without being visually exposed through the front plate 202 in the internal space of the electronic device. For example, in this case, an area of the display 400 facing the sensor module may not require a perforated opening.

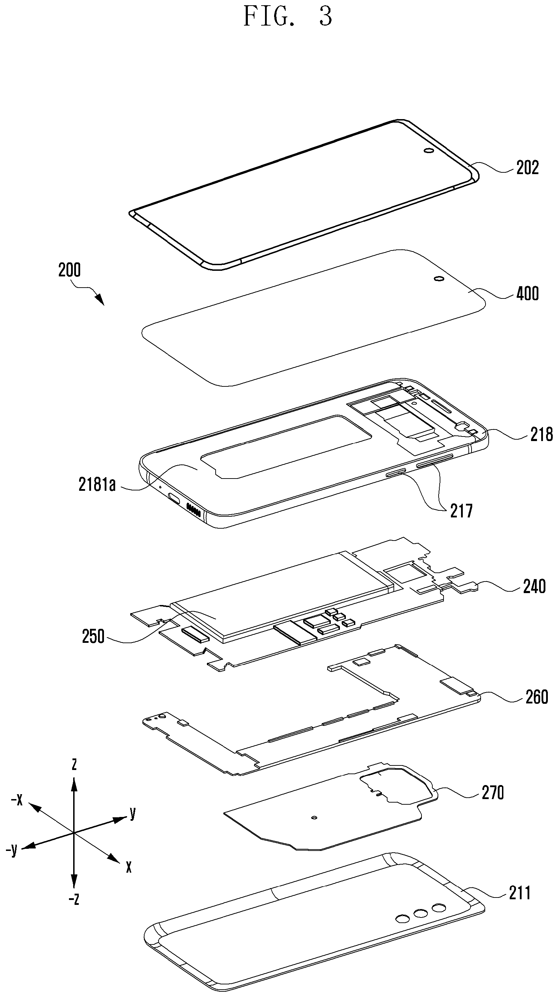

FIG. 3 is an exploded perspective view of the electronic device of FIG. 2A according to various embodiments of the disclosure.

Referring to FIG. 3, the electronic device 200 may include a side surface member 218 (e.g., the side surface bezel structure 218 of FIGS. 2A and 2B), an extension member 2181a (e.g., a bracket or a support member), a front surface plate 202 (e.g., a front surface cover), a display 400, a substrate 240, a battery 250, a support bracket 260 (e.g., a rear case or a support member), an antenna 270, and a rear surface plate 211 (e.g., a rear surface cover). In some embodiments, at least one of the components of the electronic device 200 (e.g., the extension member 2181a or the support bracket 260) may be omitted or other components may be additionally included. At least one of the components of the electronic device 200 may be the same as or similar to at least one of the components of the electronic device 200 of FIG. 2A or FIG. 2B, and a repeated description will be omitted below.

According to various embodiments, the extension member 2181a may be disposed inside the electronic device 200 and structurally coupled to the side surface member 218, or may be integrally formed with the side surface member 218. The extension member 2181a may be formed of, for example, a metal material and/or a non-metal material (e.g., a polymer material). The display 400 may be coupled to one surface of the extension member 2181a, and the substrate 240 may be coupled to an opposite surface of the extension member 2181a. A processor, a memory, and/or an interface may be mounted on the substrate 240. The processor may include, for example, one or more of a central processing unit, an application processor, a graphics processing unit, an image signal processor, a sensor hub processor, or a communication processor.

The memory may include, for example, volatile memory or non-volatile memory.

The interface may include, for example, a high-definition multimedia interface (HDMI), a universal serial bus (USB) interface, a secure digital (SD) card interface, and/or an audio interface. The interface may, for example, electrically or physically connect the electronic device 200 to an external electronic device, and may include a USB connector, an SD card/multi-media card (MMC) connector, or an audio connector.

The battery 250, as a device for supplying power to at least one component of the electronic device 200, may include, for example, a non-rechargeable primary battery, a rechargeable secondary battery, or a fuel cell. At least a portion of the battery 250 may be disposed, for example, substantially on the same plane as the substrate 340. The battery 250 may be integrally disposed inside the electronic device 200. In another embodiment, the battery 250 may be detachably disposed on the electronic device 200.

The antenna 270 may be disposed between the rear surface plate 211 and the battery 250. The antenna 270 may include, for example, a near field communication (NFC) antenna, a wireless charging antenna, and/or a magnetic secure transmission (MST) antenna. The antenna 270 may, for example, perform short-range communication with an external device or wirelessly transmit and receive power required for charging. In another embodiment, an antenna structure may be formed by a portion of the side surface member 218 and/or a portion of the extension member 2181a or a combination thereof.

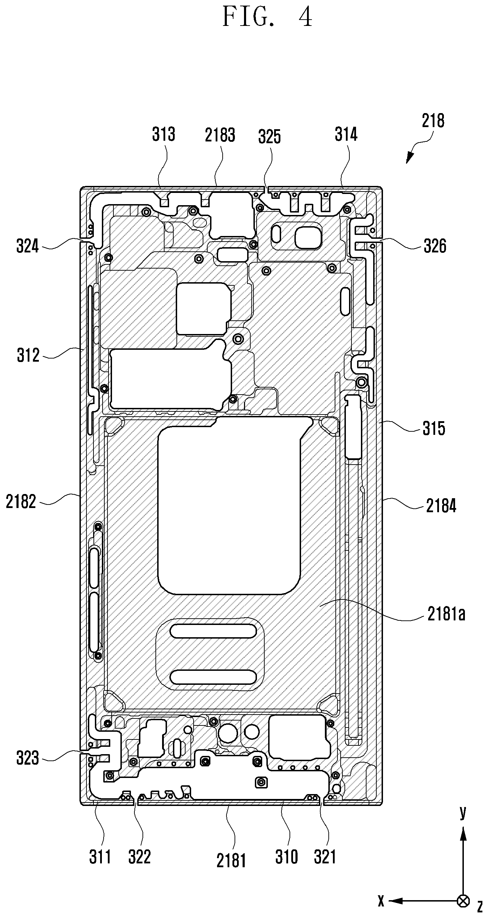

FIG. 4 illustrates a configuration of a side surface member according to various embodiments of the disclosure.

Referring to FIG. 4, the side surface member 218 (e.g., the side surface member 218 of FIG. 2A) may be formed through coupling of a conductive material (e.g., metal) and a non-conductive material (e.g., polymer). In an embodiment, the side surface member 218 may include an extension member 2181a extending at least partially from a side surface into an inner space of an electronic device (e.g., the electronic device 200 of FIG. 2A). In an embodiment, the side surface member 218 may be configured such that a side surface of the electronic device 200 and at least a portion of the extension member 2181a is formed of a conductive material, and at least a portion of the extension member 2181a and non-conductive portions 321, 322, 323, 324, 325, and 326 to be described below are formed of a non-conductive material. In an embodiment, the side surface member 218 may include a first side surface 2181 having a first length, a second side surface 2182 extending from one end of the first side surface 2181 and having a second length in a direction perpendicular to the first side surface 2181 (e.g., the y-axis direction), a third side surface 2183 extending from the second side surface 2182 substantially parallel to the first side surface 2181 and having the first length, and a fourth side surface 2184 extending from the third side surface 2183 substantially parallel to the second side surface 2182, having the second length, and extending to the other end of the first side surface 2181.

According to various embodiments, the side surface member 218 may include conductive portions 310, 311, 312, 313, 314, and 315 (e.g., conductive members) disposed to be physically segmented through spaced non-conductive portions 321, 322, 323, 324, 325, and 326 (e.g., segmentation portions or gaps). In an embodiment, the conductive portions 310, 311, 312, 313, 314, and 315 may form at least a portion of a side surface of the electronic device 200, and may be disposed to be visible from outside. For example, at least one side surface among the first, second, third, and fourth side surfaces 2181, 2182, 2183, and 2184 of the side surface member 218 may be electrically connected, via the conductive portions 310, 311, 312, 313, 314, and 315, to a wireless communication circuit (e.g., the wireless communication module 192 of FIG. 1) disposed on a substrate (e.g., the substrate 340 of FIG. 3) of the electronic device 200, and may be configured to operate in a predetermined frequency band (e.g., a legacy band ranging from about 600 MHz to about 6,000 MHz). In an embodiment, the conductive portions 310, 311, 312, 313, 314, and 315 may be used as antennas operating in at least one frequency band among a low band ranging from about 600 MHz to about 960 MHz, a mid- band ranging from about 1,700 MHz to about 2,200 MHz, a high band ranging from about 2,300 MHz to about 2,800 MHz, a sub-6 band ranging from about 5 GHz to about 6 GHz, an ultrahigh band (UHB) ranging from about 3.2 GHz to about 4.5 GHz, Bluetooth (BT), a global positioning system (GPS), or wireless fidelity (Wi-Fi).

According to various embodiments, the non-conductive portions 321, 322, 323, 324, 325, and 326 may include a first non-conductive portion 321 disposed between the first conductive portion 310 and the sixth conductive portion, a second non-conductive portion 322 disposed between the first conductive portion 310 and the second conductive portion 311, a third non-conductive portion 323 disposed between the second conductive portion 311 and the third conductive portion 312, a fourth non-conductive portion 324 disposed between the third conductive portion 312 and the fourth conductive portion 313, a fifth non-conductive portion 325 disposed between the fourth conductive portion 313 and the fifth conductive portion 314, and a sixth non-conductive portion 326 disposed between the fifth conductive portion 314 and the sixth conductive portion 315. In an embodiment, the first conductive portion 310 may be disposed on a portion of the first side surface 2181 via the first non-conductive portion 321 and the second non-conductive portion 322 disposed on the first side surface 2181. In an embodiment, the second conductive portion 311 may be disposed to extend from a portion of the first side surface 2181 to a portion of the second side surface 2182 via the second non-conductive portion 322 and the third non-conductive portion 323 disposed on the second side surface 2182. In an embodiment, the third conductive portion 312 may be disposed on a portion of the second side surface 2182 via the third non-conductive portion 323 and the fourth non-conductive portion 324 disposed on the second side surface 2182. In an embodiment, the fourth conductive portion 313 may be disposed to extend from a portion of the second side surface 2182 to a portion of the third side surface 2183 via the fourth non-conductive portion 324 and the fifth non-conductive portion 325 disposed on the third side surface 2183. In an embodiment, the fifth conductive portion 314 may be disposed to extend from a portion of the third side surface 2183 to a portion of the fourth side surface 2184 via the fifth non-conductive portion 325 and the sixth non-conductive portion 326 disposed on the fourth side surface 2184. In an embodiment, the sixth conductive portion 315 may be disposed to extend from a portion of the fourth side surface 2184 to a portion of the first side surface 2181 via the sixth non-conductive portion 326 and the first non-conductive portion 321.

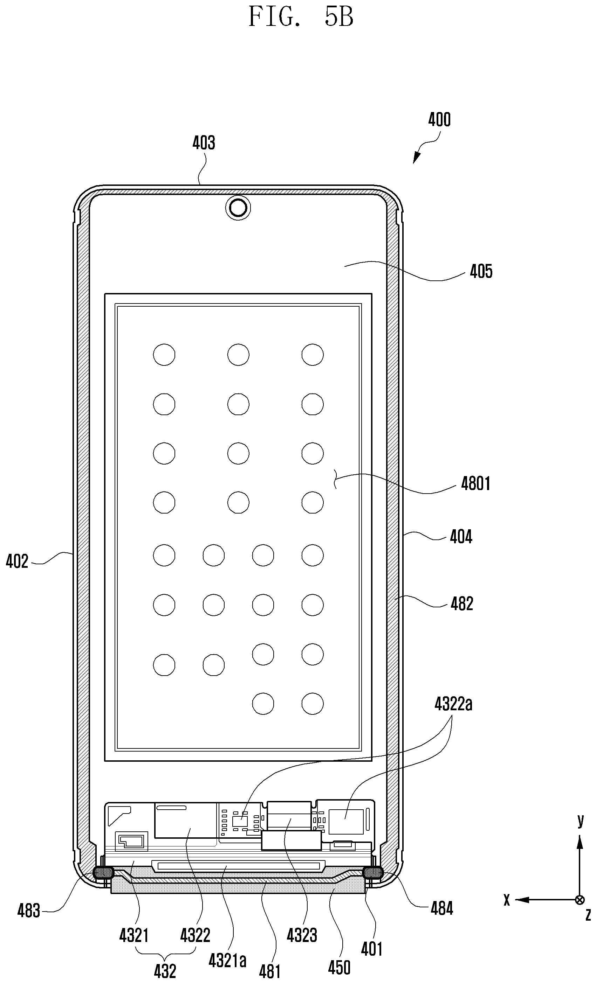

According to exemplary embodiments of the disclosure, edges (e.g., the first, second, third, and fourth edges 401, 402, 403, and 404 of FIG. 5B) of a display (e.g., the display 400 of FIG. 5B) disposed to be supported via the side surface member 218 and/or the extension member 2181a may be disposed to be close to the conductive portions 310, 311, 312, 313, 314, and 315. In an embodiment, at least one edge among the edges 401, 402, 403, and 404 of the display 400 may be covered by a molding member (e.g., the molding member 450 of FIG. 5B), and a fixing structure and a waterproof structure of the display 400 may be provided by attaching the molding member 450 to the extension member 2181a of the side surface member 218 via an adhesive member (e.g., the first adhesive member 481 of FIG. 5B). In an embodiment, the molding member 450 and the conductive portions 310, 311, 312, 313, 314, and 315 used as antennas may be configured to be spaced apart from each other by at least a predetermined interval so as to reduce coupling between conductive structures of the display 400 (e.g., a bent portion (e.g., a chip on plastic (COP)) and/or a conductive sheet (e.g., a Cu sheet)) through the molding member 450 and/or the adhesive member 481, thereby helping reduce deterioration in radiation performance of the antennas.

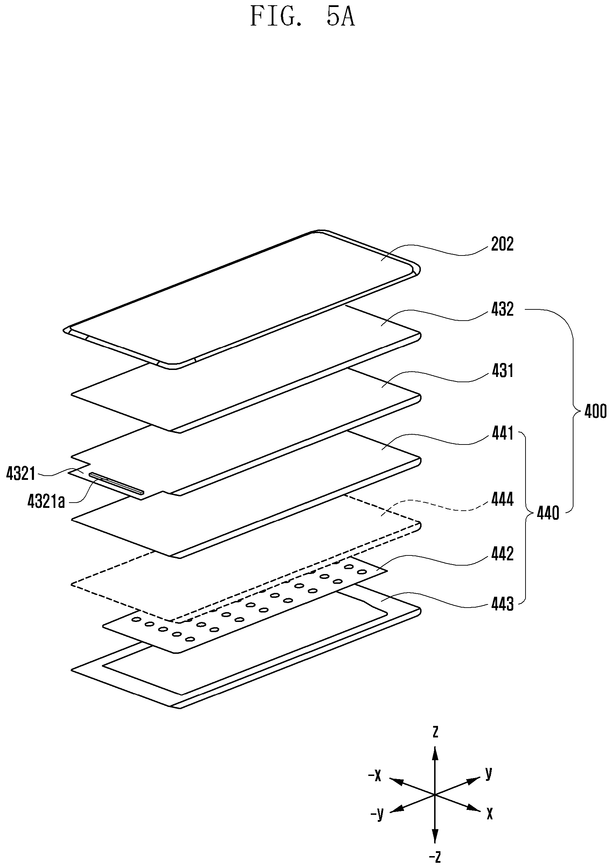

FIG. 5A is an exploded perspective view illustrating a stacked structure of a display according to various embodiments of the disclosure.

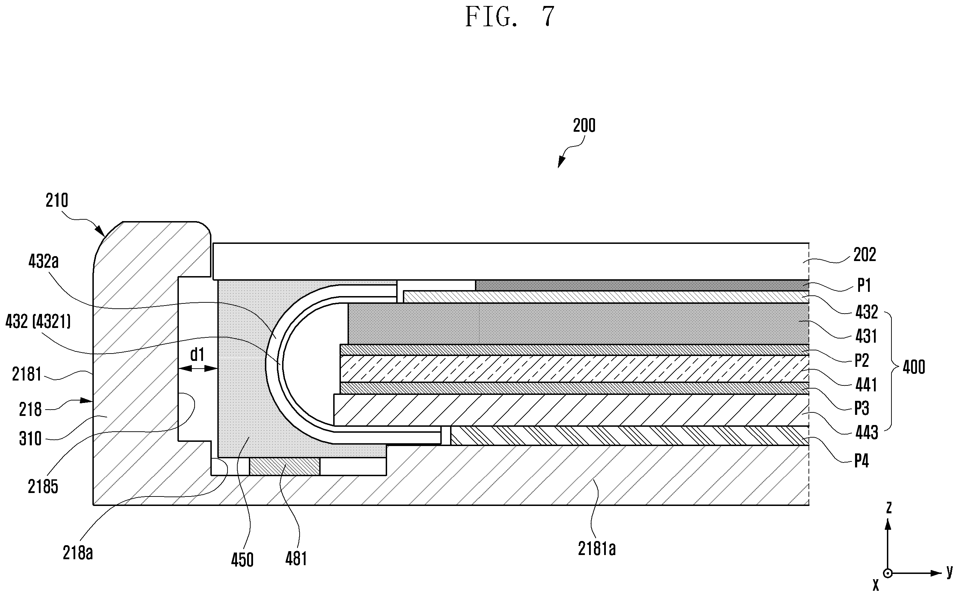

Referring to FIG. 5A, the display 400 may include a polarizer (POL) 432 (e.g., a polarizing film), a display panel 431, and/or at least one auxiliary material layer 440, which are sequentially stacked on a rear surface of the front surface plate 202 (e.g., a transparent cover, a front surface cover, a glass plate, or a cover member) via adhesive members (e.g., adhesive members P1, P2, P3, and P4 of FIG. 7). In an embodiment, the adhesive members may include an optical clear adhesive (OCA), a pressure sensitive adhesive (PSA), a thermosetting adhesive, a general adhesive, or a double-sided tape. In an embodiment, the display panel 431 and the polarizer 432 may be integrally formed. In some embodiments, the display 400 may further include touch sensors disposed between the front surface plate 202 and the polarizer 432, between the display panel 431 and the polarizer 432, or in the display panel 431.

According to various embodiments, the display panel 431 may include a plurality of pixels and a wiring structure (e.g., an electrode pattern). In an embodiment, the polarizer 432 may selectively transmit light generated from a light source of the display panel 431 and vibrating in a predetermined direction. In an embodiment, the display panel 431 and the polarizer 432 may be integrally formed.

According to various embodiments, the at least one auxiliary material layer 440 may include a polymer member 441, at least one functional member 442 disposed on a rear surface (in the -z-axis direction) of the polymer member 441, and/or a conductive sheet 443 disposed on a rear surface (in the -z-axis direction) of the at least one functional member 442, the polymer member 441, the at least one functional member 442, and the conductive sheet 443 being disposed to be sequentially attached to the rear surface (in the -z-axis direction) of the display panel 431. In an embodiment, the polymer member 441 may include a light-shielding layer (e.g., a black layer) configured to remove bubbles that may be generated between the display panel 431 and attachments below the display panel 431 and to block light generated from the display panel 431 or incident from outside, and/or a buffer layer disposed for impact mitigation. In an embodiment, the at least one functional member 442 may include a heat dissipation sheet (e.g., a graphite sheet) for heat dissipation, a force-touch flexible printed circuit board (FPCB), a fingerprint sensor flexible printed circuit board (FPCB), a communication antenna radiator, a conductive/non-conductive tape, or an open-cell sponge. In an embodiment, the conductive sheet 443 may be a metal sheet (e.g., a metal plate), and may be used to help reinforce rigidity of an electronic device (e.g., the electronic device 200 of FIG. 2A), shield surrounding noise, and dissipate heat emitted from surrounding heat-radiating components. In an embodiment, the conductive sheet 443 may include Cu, Al, Mg, stainless steel (SUS), or a clad (e.g., a laminated member in which SUS and Al are alternately disposed). In another embodiment, the display 400 may further include a detection member 444 configured to detect an input through an electronic pen of an electromagnetic induction type. In an embodiment, the detection member 444 may include a digitizer. In an embodiment, the detection member 444 may be disposed between the polymer member 441 and the functional member 442. In another embodiment, the detection member 444 may be disposed between the display panel 431 and the polymer member 441.

FIG. 5B is a view illustrating a rear surface of a display according to various embodiments of the disclosure.

The display 400 according to exemplary embodiments of the disclosure may include an unbreakable (UB)-type organic light-emitting diode (OLED) display (e.g., a curved display or a flexible display). However, the disclosure is not limited thereto, and the display 400 may include an OCTA (on-cell touch AMOLED (active-matrix organic light-emitting diode)) flat-type display.

Referring to FIG. 5B, the display 400 may be formed in a rectangular shape. In an embodiment, the display 400 may include a first edge 401, a second edge 402 extending in a perpendicular direction from the first edge 401, a third edge 403 extending from the second edge 402 in a direction parallel to the first edge 401, and a fourth edge 404 extending from the third edge 403 to the first edge 401. In an embodiment, the display 400 may be disposed such that the first edge 401 corresponds to the first side surface (e.g., the first side surface 2181 of FIG. 4) of the side surface member (e.g., the side surface member 218 of FIG. 4), the second edge 402 corresponds to the second side surface (e.g., the second side surface 2182 of FIG. 4) of the side surface member 218, the third edge 403 corresponds to the third side surface (e.g., the third side surface 2183 of FIG. 4) of the side surface member 218, and the fourth edge 404 corresponds to the fourth side surface (e.g., the fourth side surface 2184 of FIG. 4) of the side surface member 218.

According to various embodiments, the display 400 may include a bent portion 432 disposed, at the first edge 401, to be folded from a display panel (e.g., the display panel 431 of FIG. 5A) toward a portion of a rear surface 405 of the display 400. In an embodiment, the bent portion 432 may include an extension portion 4321 extending from the display panel 431 and including a control circuit 4321a (e.g., a display control circuit), and a flexible substrate 4322 electrically connected to the extension portion 4321 and including a plurality of electric elements 4322a. In an embodiment, the control circuit 4321a may include a display driver IC (DDI) or a touch display driver IC (TDDI) disposed on the extension portion 4321 having an electrical wiring structure. In an embodiment, the bent portion 432 may include a chip on panel or chip on plastic (COP) structure in which the control circuit 4321a is directly disposed on the extension portion 4321. In some embodiments, the bent portion 432 may include a chip on film (COF) structure in which the control circuit 4321a is mounted on a separate connection film (not illustrated) connecting the extension portion 4321 and the flexible substrate 4322. In an embodiment, the display 400 may include a connector 4323 extending from the flexible substrate 4322 and electrically connected to a substrate (e.g., the substrate 240 of FIG. 3) of an electronic device (e.g., the electronic device 200 of FIG. 3). In an embodiment, the plurality of electric elements 4322a may include a touch IC, a flash memory for display, an ESD prevention diode, a pressure sensor, a fingerprint sensor, or a passive element such as a decap. In some embodiments, the bent portion 432 may extend from any one of the second edge 402, the third edge 403, or the fourth edge 404 of the display.

According to various embodiments, an electronic device (e.g., the electronic device 200 of FIG. 2A) may include a buffer member 450 (e.g., a molding portion, a protective portion, a protective layer, a coating layer, a filling member, or a buffer member) disposed to surround at least the bent portion 432 at the first edge 401 of the display 400. In an embodiment, the molding member 450 may be formed in a manner in which a molding liquid of a resin material injected through a molding injector is cured. In an embodiment, the cured molding liquid may be disposed as the molding member 450 having a predetermined molding modulus value so as to protect the bent portion 432. In an embodiment, the molding member 450 may be disposed to cover the bent portion 432 except for the control circuit 4321a. In some embodiments, the molding member 450 may be disposed to cover the control circuit 4321a. In an embodiment, the molding member 450 may have a molding modulus value of about 10 MPa or more, and may perform a buffering action against an external impact.

According to various embodiments, an electronic device (e.g., the electronic device 200 of FIG. 2A) may include one or more adhesive members 481, 482, 483, and 484 (e.g., one or more waterproofing members). In an embodiment, the one or more adhesive members 481, 482, 483, and 484 may be disposed to form a closed-loop waterproof space 4801 between the rear surface 405 of the display 400 and an extension member (e.g., the extension member 2181a of FIG. 4) of a side surface member (e.g., the side surface member 218 of FIG. 4). In an embodiment, the waterproof space 4801 may protect the control circuit 4321a disposed on the extension portion 4321 of the bent portion 432 and the plurality of electric elements 4322a disposed on the flexible substrate 4322 from external moisture and/or foreign substances. In an embodiment, the one or more adhesive members 481, 482, 483, and 484 may include a first adhesive member 481 disposed between the molding member 450 and an extension member (e.g., the extension member 2181a of FIG. 4), a second adhesive member 482 disposed between the rear surface 405 of the display 400 and the extension member 2181a, and third and fourth adhesive members 483 and 484 disposed to connect a stepped structure between opposite ends of the first adhesive member 481 and opposite ends of the second adhesive member 482. In an embodiment, the third and fourth adhesive members 483 and 484 may include a cure in place gasket (CIPG) injected through a through-hole formed in the extension member 2181a and then cured. In an embodiment, the first, second, third, and fourth adhesive members 481, 482, 483, and 484 may include an optical clear adhesive (OCA), a pressure sensitive adhesive (PSA), a thermosetting adhesive, a general adhesive, or a double-sided tape.

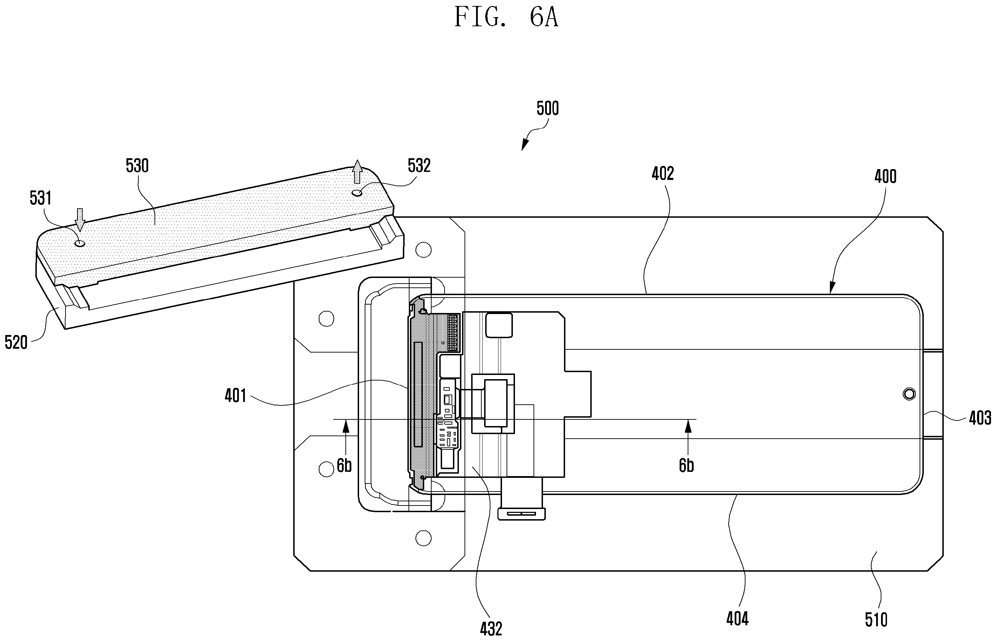

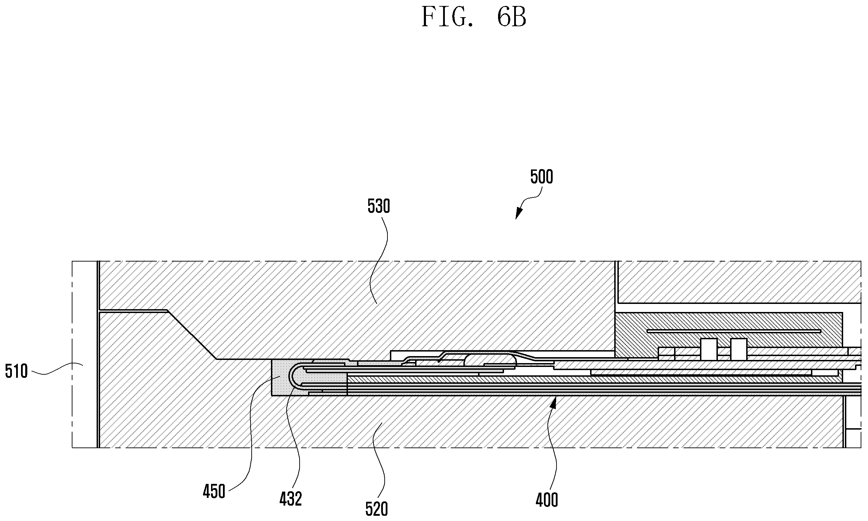

FIGS. 6A and 6B are schematic views illustrating a process of applying a molding member to a display according to various embodiments of the disclosure.

Referring to FIGS. 6A and 6B, the display 400 may be fixed through a molding jig 510 in an aligned manner. For example, the first edge 401 of the display 400 may be disposed, in the molding jig 510, between a lower mold 520 and an upper mold 530. In an embodiment, the lower mold 520 and the upper mold 530 may be formed of a silicone material. For example, the upper mold 530 may include an inlet 531 for injection of a molding liquid and an outlet 532 for discharge of an over-injected molding liquid. According to an embodiment, the inlet 531 and the outlet 532 may be disposed at the first edge 401 of the display 400 at positions corresponding to opposite ends of the bent portion 432. In an embodiment, when the molding liquid is injected into the inlet 531 of the upper mold 530, the molding liquid may fill a space including the bent portion 432 of the display 400 and may be cured into the molding member 450 so as to cover the bent portion 432 through at least one of natural curing, thermal curing, or ultraviolet curing.

FIG. 7 is a partial cross-sectional view of an electronic device according to various embodiments of the disclosure taken along line 7-7 of FIG. 2A.

Referring to FIG. 7, the electronic device 100 may include a display 400 disposed to be supported by an extension member 2181a extending from a side surface member 218. In an embodiment, the display 400 may include a polarizer 432, a display panel 431, a polymer layer 441, and/or a conductive sheet 443 sequentially disposed on a rear surface of the front surface plate 202. In an embodiment, the polarizer 432, the display panel 431, the polymer layer 441, and/or the conductive sheet 443 may be attached to each other via adhesive members P1, P2, P3, and P4 (or an adhesive). In an embodiment, the display 400 may include a bent portion 432 extending from the display panel 431 and disposed to be bent toward the rear surface of the display 400. In an embodiment, the bent portion 432 may include a bent portion protective layer 432a attached to an outer surface thereof.

According to various embodiments, the bent portion 432 of the display 400 disposed near the first side surface 2181 of the side surface member 218 may be disposed to be covered by a molding member 450. In an embodiment, the display 400 may be disposed to be attached to the extension member 2181a via a first adhesive member 481 disposed between the molding member 450 and the extension member 2181a. In an embodiment, the first adhesive member 481 may be disposed at a position at least partially overlapping the molding member 450 when the display 400 is viewed from above. In an embodiment, the first adhesive member 481 may be disposed at a position at least partially overlapping the bent portion 432 when the display 400 is viewed from above. Accordingly, the arrangement structure of the first adhesive member 481 disposed between the molding member 450 and the extension member 2181a may help reduce a bezel region (e.g., an inactive region or a black matrix (BM) region) of the display 400.

According to various embodiments, the first side surface 2181 of the side surface member 218 may include a first conductive portion 310 used as an antenna (e.g., a conductive portion or an antenna radiator). In an embodiment, the first conductive portion 310 may be electrically connected to a wireless communication circuit (e.g., the wireless communication module 192 of FIG. 1) disposed on a substrate (e.g., the substrate 240 of FIG. 3) of the electronic device 200. In an embodiment, although a greater separation distance between the conductive portion 310 used as an antenna and the bent portion 432 at least partially including a conductive material (e.g., a wiring structure or a trace) is advantageous for exhibiting improved radiation performance, the molding member 450 and/or the first adhesive member 481 provided to reduce the bezel region may adversely affect radiation performance of the antenna by acting as a coupling element between the first conductive portion 310 and the bent portion 432.

According to an exemplary embodiment of the disclosure, in order to physically space the molding member 450 and the first conductive portion 310 apart from each other by a predetermined separation distance d1, the first conductive portion 310 may include a cutting portion 2185 formed at least partially lower than an inner surface. In an embodiment, the cutting portion 2185 may be formed such that a distance d1 (e.g., a shortest distance) between the first conductive portion 310 and the molding member 450 is spaced apart by about 0.25 mm or more. In an embodiment, the cutting portion 2185 may be disposed to at least partially overlap the molding member 450 when the first side surface 2181 is viewed from outside (e.g., when viewed in a direction perpendicular to the first side surface 2181 (the y-axis direction)). For example, the cutting portion 2185 may have a length substantially equal to that of the molding member 450 when the first side surface 2181 is viewed from outside. In some embodiments, the cutting portion 2185 may be have a length shorter than that of the molding member 450. In some embodiments, the cutting portion 2185 may have a length longer than that of the molding member 450. In an embodiment, the cutting portion 2185 may have a width substantially equal to a width of the molding member 450 in a direction perpendicular to a length of the molding member 450 (e.g., the ±z-axis direction) when the first side surface 2181 is viewed from outside. In some embodiments, the cutting portion 2185 may have a width greater than a width of the molding member 450 in a direction perpendicular to a length of the molding member 450 (e.g., the ±z-axis direction). In some embodiments, the cutting portion 2185 may have a width smaller than a width of the molding member 450 in a direction perpendicular to a length of the molding member 450 (e.g., the ±z-axis direction). For example, the cutting portion 2185 may be formed such that a width of the cutting portion 2185 in a direction perpendicular to a length of the molding member 450 (e.g., the ±z-axis direction) is about 1.3 mm or more, and a depth from the inner surface 218a of the first conductive portion 310 is in a range of about 0 mm to about 0.5 mm. Accordingly, because, through the cutting portion 2185, the separation distance d1 between the inner surface 218a of the first conductive portion 310 and the molding member 450 is relatively greater than at an inner surface 218a where the cutting portion 2185 is not formed, coupling caused by the molding member 450 between the first conductive portion 310 and the bent portion 432 may be reduced, and performance degradation of an antenna using the first conductive portion 310 may be reduced.

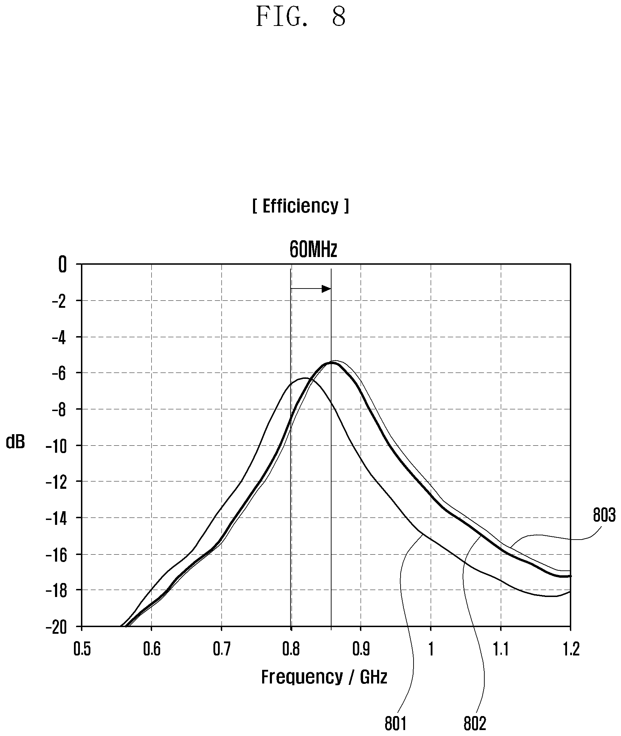

FIG. 8 illustrates graphs comparing radiation characteristics of an antenna according to a distance between the cutting portion and the molding member according to various embodiments of the disclosure.

Referring to FIG. 8, it may be identified that, in an antenna using the first conductive portion 310, when the cutting portion 2185 is not formed in the first conductive portion 310 and the molding member 450 is attached to the extension member 2181a via the first adhesive member 481 (e.g., graph 801), a frequency band is low-shifted by about 60 MHz from a target frequency band in a case where radiation is exhibited only by the first conductive portion 310 when the molding member 450 and the first adhesive member 481 are not disposed (e.g., graph 803). This may mean that the molding member 450 and/or the first adhesive member 481 disposed between the bent portion 432 of the display 450 and the first conductive portion 310 acts as a coupling element, thereby affecting the antenna.

According to an exemplary embodiment of the disclosure, when the first conductive portion 310 includes the cutting portion 2185 formed at a position corresponding to the molding member 450, and the first conductive portion 310 is physically spaced apart from the molding member 450 by at least a predetermined separation distance (e.g., about 0.25 mm or more) (e.g., graph 802), it may be identified that, compared to a frequency band when the molding member 450 is attached to the extension member 2181a via the first adhesive member 481 (e.g., graph 801), the frequency band is high-shifted to be similar to a target frequency band in a case where radiation is exhibited only by the first conductive portion 310 when the molding member 450 and the first adhesive member 481 are not disposed (e.g., graph 803). This may mean that, when a separation distance between the molding member 450 and/or the first adhesive member 481 and the bent portion 432 is physically increased through the cutting portion 2185, radiation performance of an antenna through the first conductive portion 310 is improved.

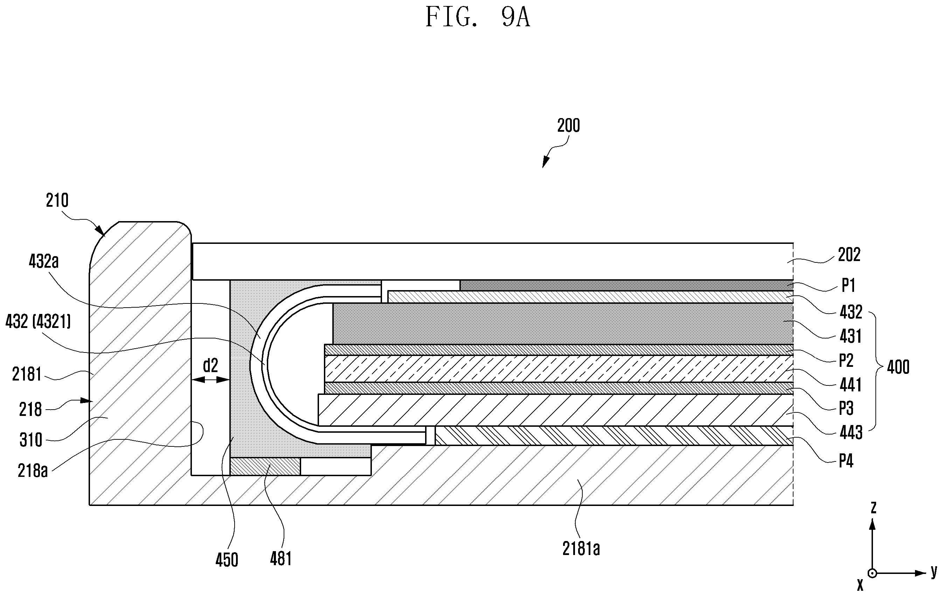

FIG. 9A is a partial cross-sectional view of an electronic device according to various embodiments of the disclosure.

In describing the electronic device 200 of FIG. 9A, the same reference numerals are assigned to components substantially identical to those of the electronic device 200 of FIG. 7, and a detailed description thereof may be omitted.

Referring to FIG. 9A, the first conductive portion 310 may be used as at least a portion of the side surface member 218 of the electronic device 200. In an embodiment, when a cutting portion (e.g., the cutting portion 2185 of FIG. 7) is formed in the side surface member 218, rigidity design of the electronic device 200 may be restricted. Accordingly, the molding member 450 according to exemplary embodiments of the disclosure may be designed in consideration of a separation distance d2 from the inner surface 218a of the first conductive portion 310. For example, the separation distance d2 between the molding member 450 and the inner surface of the first conductive portion 310 may be designed to be about 0.25 mm or more. In an embodiment, the molding member 450 may be formed to have an inclination or in various shapes having partially different separation distances from the inner surface 218a of the first conductive portion 310. In this case, the separation distance d2 between the molding member 450 and the inner surface 218a of the first conductive portion 310 may be configured based on the shortest distance between the molding member 450 and the inner surface 218a of the first conductive portion 310.

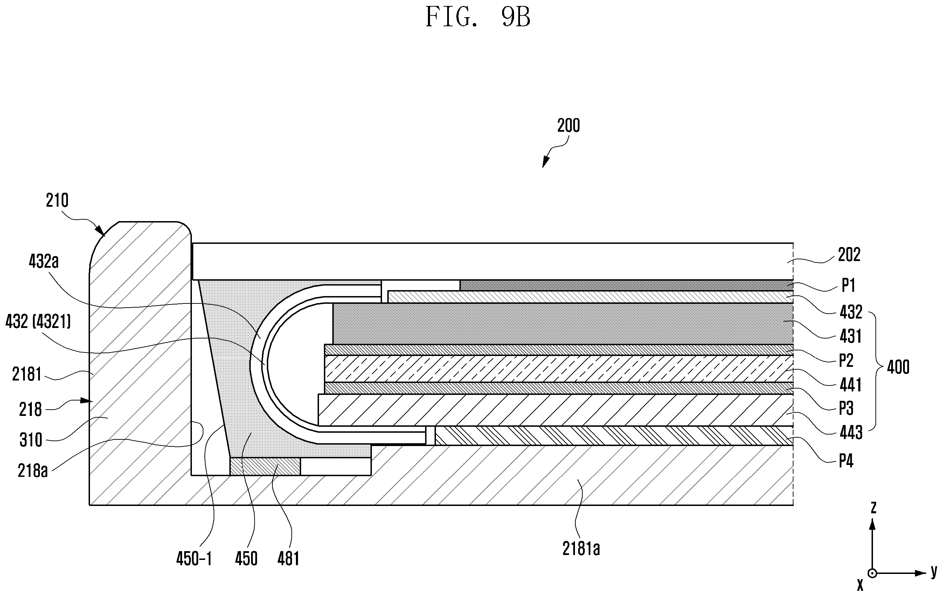

FIG. 9B is a partial cross-sectional view of an electronic device according to various embodiments of the disclosure.

In describing the electronic device 200 of FIG. 9B, the same reference numerals are assigned to components substantially identical to those of the electronic device 200 of FIG. 9A, and a detailed description thereof may be omitted.

Referring to FIG. 9B, the molding member 450 may be configured such that a surface corresponding to the inner surface 218a of the side surface member 218 is formed as an inclined surface 450-1. In some embodiments, the molding member 450 may be formed such that a surface corresponding to the inner surface 218a of the side surface member 218 has various shapes (e.g., a curved surface or an uneven surface). In this case, the separation distance between the molding member 450 and the inner surface 218a of the first conductive portion 310, which is configured to improve radiation performance of the antenna, may be configured based on the shortest distance between the molding member 450 and the inner surface 218a of the first conductive portion 310.

Although not illustrated, the molding member 450 of FIG. 7 may also be formed to have an inclined surface and/or various shapes. In this case, the separation distance between the molding member 450 and the cutting portion 2185 formed on the inner surface 218a of the first conductive portion 310, which is configured to improve radiation performance of the antenna, may be configured based on the shortest distance between the molding member 450 and the cutting portion 2185.

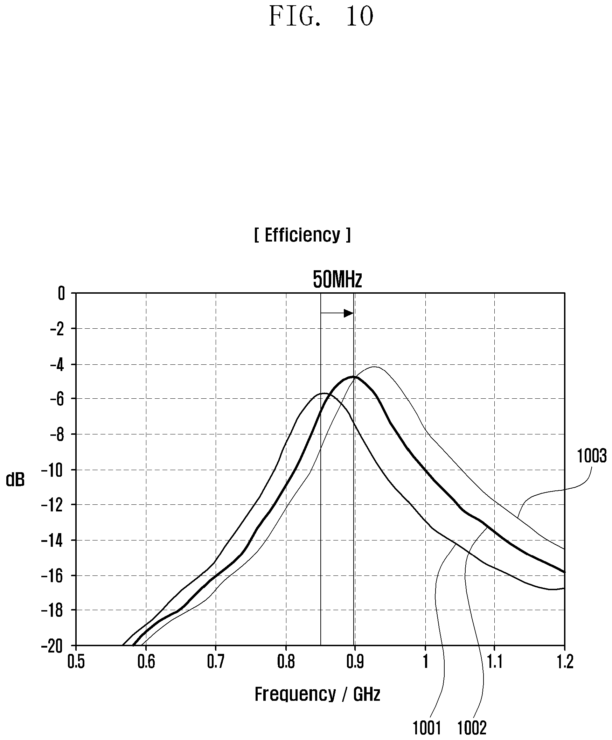

FIG. 10 illustrates graphs comparing radiation characteristics of an antenna according to a distance between the inner surface of the conductive portion and the molding member according to various embodiments of the disclosure.

Referring to FIG. 10, it may be identified that, in an antenna using the first conductive portion 310, when the molding member 450 is disposed to be close to the first conductive portion without considering the distance between the first conductive portion 310 and the molding member 450 (e.g., graph 1001), a frequency band is low-shifted by about 70 MHz from a target frequency band in a case where radiation is exhibited only by the first conductive portion 310 when the molding member 450 and the first adhesive member 481 are not disposed (e.g., graph 1003). This may mean that the molding member 450 and/or the first adhesive member 481, which are disposed close between the bent portion 432 of the display 450 and the first conductive portion 310, act as a coupling element, thereby affecting the antenna.

According to exemplary embodiments of the disclosure, when the molding member 450 is configured to be physically spaced apart from the inner surface of the first conductive portion 310 by at least a predetermined separation distance (e.g., about 0.25 mm or more) (e.g., graph 1002), it may be identified that a frequency band is high-shifted by about 50 MHz from a frequency band in a case where the molding member 450 is disposed close to the first conductive portion 310 and acts as a coupling element (e.g., graph 1001), thereby moving closer to the target frequency. This may mean that, when the separation distance of the molding member 450 from the first conductive portion 310 is configured to be at least a predetermined distance or more, radiation performance of an antenna through the first conductive portion 310 is improved.

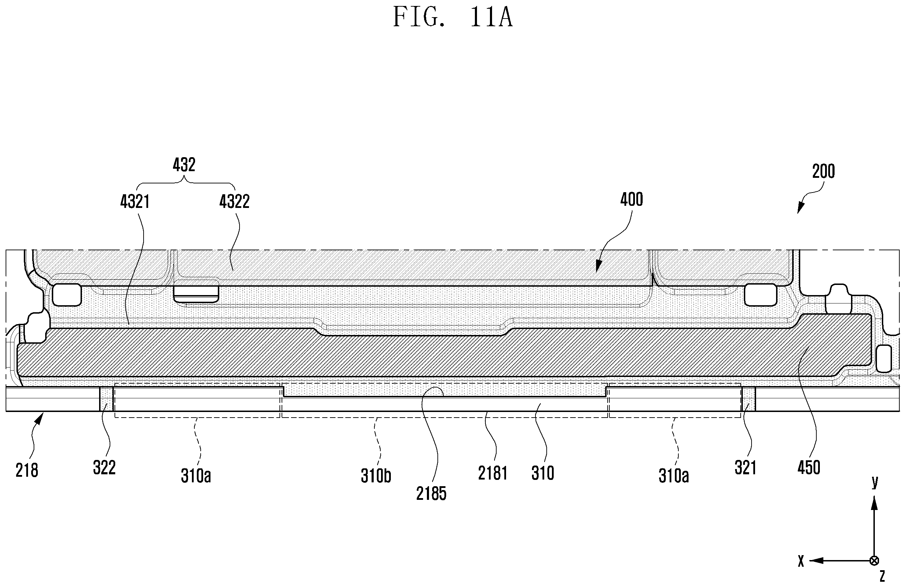

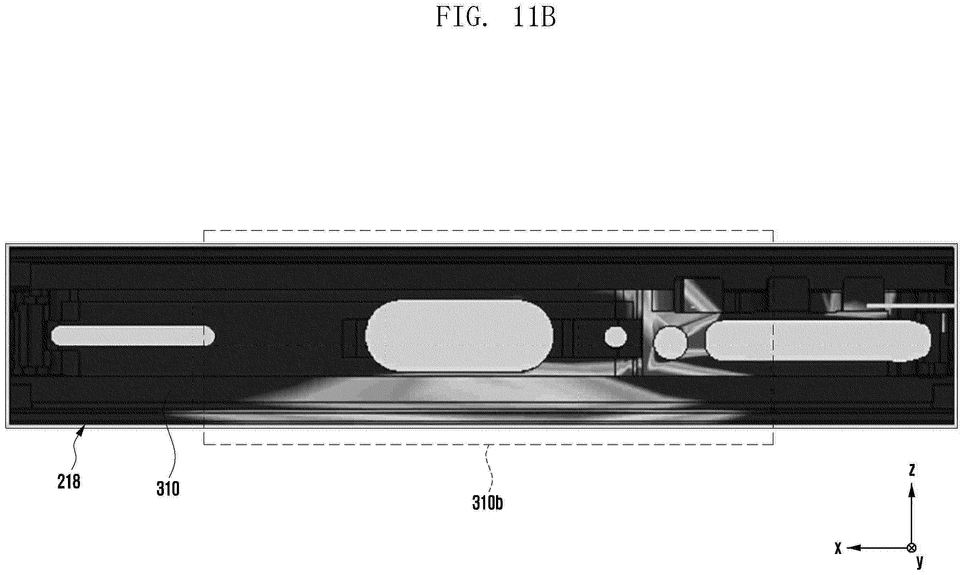

FIG. 11A is a view schematically illustrating a distance arrangement between a conductive portion and a molding member according to various embodiments of the disclosure. FIG. 11B is a view illustrating a current distribution of a conductive portion used as an antenna according to various embodiments of the disclosure.

Referring to FIGS. 11A and 11B, the electronic device 200 may include a first conductive portion 310 disposed on a first side surface 2181 of a side surface member 218. In an embodiment, the first conductive portion 310 may be disposed to be segmented through a first non-conductive portion 321 and a second non-conductive portion 322 spaced apart from each other on the first side surface 2181. In an embodiment, the first conductive portion 310 may operate as an antenna by being electrically connected via a wireless communication circuit (e.g., a feeding portion) (e.g., the wireless communication module 192 of FIG. 1) disposed on a substrate (e.g., the substrate 240 of FIG. 3) of the electronic device 200. In an embodiment, the first conductive portion 310 may be fed near the first non-conductive portion 321 or near the second non-conductive portion 322.

According to various embodiments, the electronic device 200 may include a display 400. In an embodiment, the display 400 may include a bent portion 432 including an extension portion 4321 extending from a display panel (e.g., the display panel 431 of FIG. 7) and a flexible substrate 4322 electrically connected to the extension portion 4321. In an embodiment, the bent portion 432 may extend outward from the display 400 and then be bent and attached to the rear surface of the display 400. In an embodiment, the display 400 may be attached to at least a portion of the side surface member 218 (e.g., the extension member 2181a of FIG. 7) via a molding member 450 disposed to cover the bent portion 432. In this case, the bent portion 432 and the molding member 450 may be disposed to be close to the first conductive portion 310 of the first side surface 2181.

According to various embodiments, the first conductive portion 310 used as an antenna may include a cutting portion 2185 recessed inward in order to reduce coupling with the bent portion 432 through the molding member 450. In an embodiment, the cutting portion 2185 may be formed in a portion of the first conductive portion 310 with a length shorter than that of the bent portion 432, thereby being advantageous for reinforcing rigidity of the side surface member 218.

According to various embodiments, the first conductive portion 310 may include a first portion 310a having a first separation distance from the molding member 450 and a second portion 310b disposed to have a second separation distance farther than the first separation distance from the molding member 450 through the cutting portion 2185. In an embodiment, the second portion 310b on which the cutting portion 2185 is disposed may be formed in a central portion of the first conductive portion 310 with a predetermined length. For example, a length and a position of the cutting portion 2185 may be determined to correspond to a position at which a current density of the conductive portion 310 illustrated in FIG. 11B is highest. Accordingly, when the first conductive portion 310 operates as an antenna, the cutting portion 2185 disposed at a position at which the current density is highest may increase a separation distance between the first conductive portion 310 and the molding member 450, thereby reducing a coupling effect with the bent portion 432 through the molding member 450 and helping reduce performance degradation of the antenna. In addition, even when corresponding to the bent portion 432, portions other than a portion having a high current density in the first conductive portion 310 may maintain an original thickness, thereby helping reinforce rigidity of the electronic device 200.

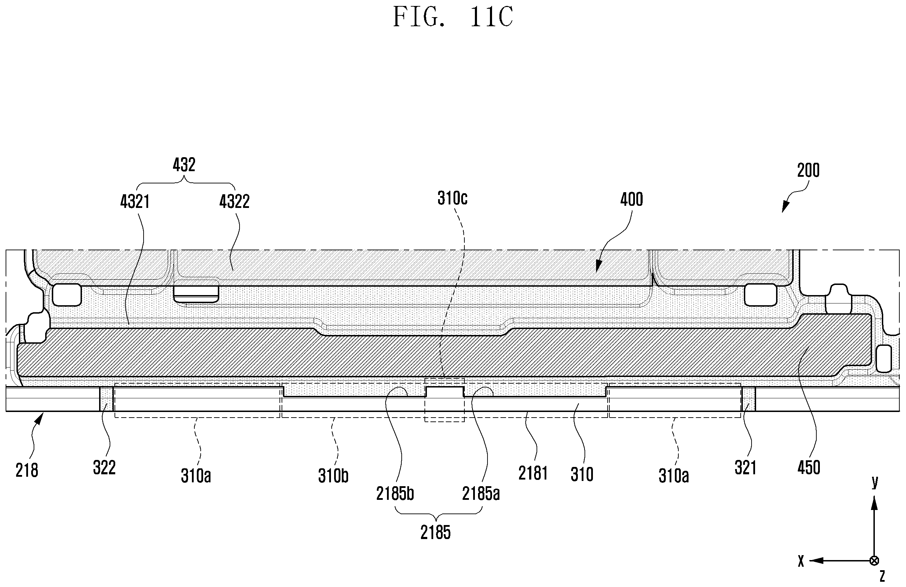

FIG. 11C is a view schematically illustrating a distance arrangement between a conductive portion and a molding member according to various embodiments of the disclosure.

In describing the electronic device 200 of FIG. 11C, the same reference numerals are assigned to components substantially identical to those of the electronic device 200 of FIG. 11A, and a detailed description thereof may be omitted.

Referring to FIG. 11C, the first conductive portion 310 may include a cutting portion 2185 formed in a second portion 310b having a relatively high current density. In an embodiment, the cutting portion 2185 may include a first cutting portion 2185a and a second cutting portion 2185b spaced apart from the first cutting portion 2185a. In an embodiment, a portion 310c between the first cutting portion 2185a and the second cutting portion 2185b, which are spaced apart from each other in the second portion 310b, may be formed to have an original thickness of the side surface member 218 to be substantially the same as that of the first portion 310a, thereby helping reinforce rigidity of the side surface member 218. In some embodiments, the cutting portion 2185 may be divided into three or more cutting portions spaced apart from each other at a predetermined interval in the second portion 310b. In some embodiments, the cutting portion 2185 may be divided into a plurality of cutting portions through the first portion 310a and the second portion 310b corresponding to an entire length of the first conductive portion 310.

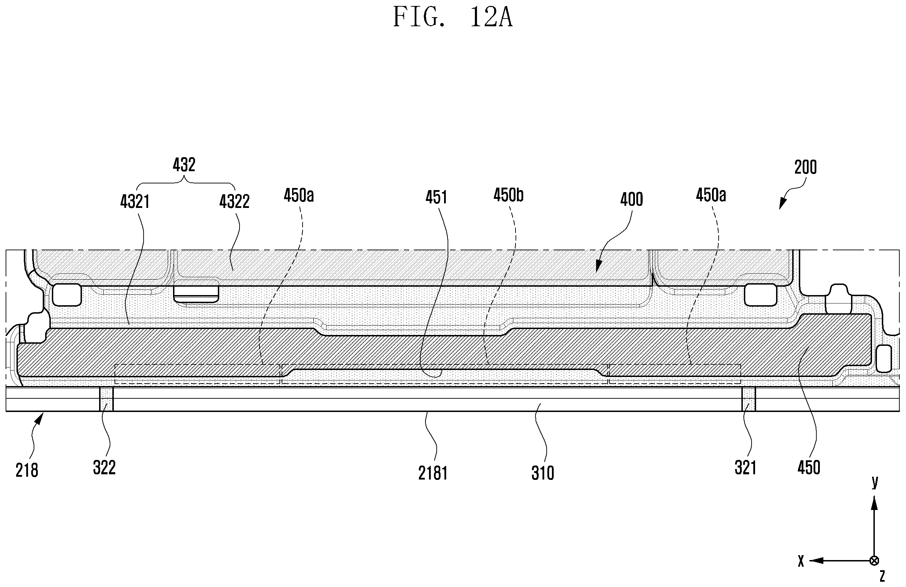

FIGS. 12A to 12C are views each schematically illustrating a distance arrangement between a conductive portion and a molding member according to various embodiments of the disclosure.

In describing the electronic device 200 of FIGS. 12A to 12C, the same reference numerals are assigned to components substantially identical to those of the electronic device 200 of FIG. 11A, and a detailed description thereof may be omitted.

Referring to FIG. 12A, the molding member 450 may include a third portion 450a having a first separation distance from the first conductive portion 310 and a fourth portion 450b disposed to have a second separation distance farther than the first separation distance from the first conductive portion 310. In an embodiment, the fourth portion 450b may be disposed at a position corresponding to a position having a relatively high current density in the first conductive portion 310. In an embodiment, the fourth portion 450b of the molding member 450 may be formed such that a separation distance from the first conductive portion 310 is relatively greater, and may include a removal portion 451 from which a portion of the molding member 450 is removed or omitted. Accordingly, when the first conductive portion 310 operates as an antenna, the removal portion 451 disposed at a corresponding position of the molding member 450 corresponding to a position having a relatively high current density in the first conductive portion 310 may increase a separation distance between the first conductive portion 310 and the molding member 450, thereby reducing a coupling effect with the bent portion 432 through the molding member 450 and helping reduce performance degradation of the antenna. In addition, even when corresponding to the bent portion 432, a corresponding region of the molding member 450 corresponding to a portion other than a portion having a high current density in the first conductive portion 310 may maintain an original thickness, thereby strengthening adhesive force between the display 400 and the extension member (e.g., the extension member 2181a of FIG. 7) and helping protect the bent portion 432.

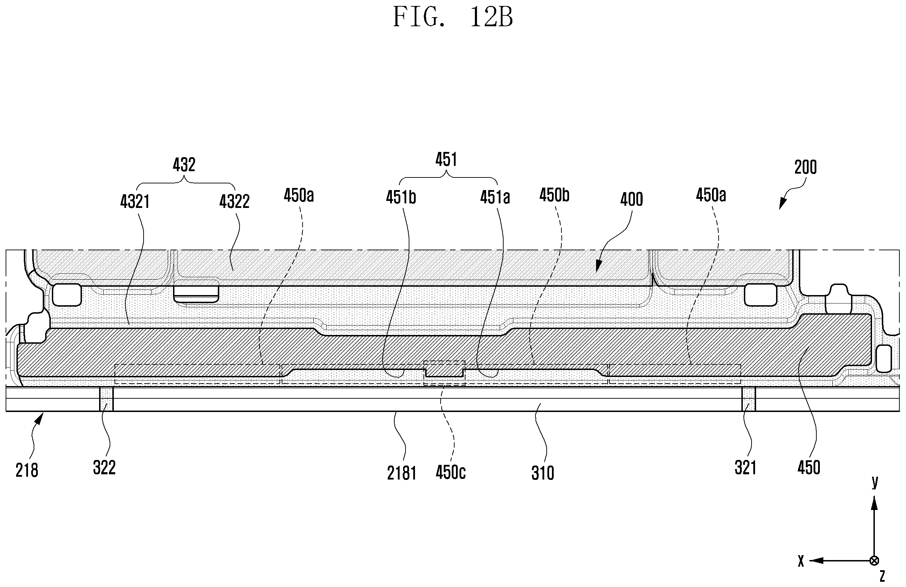

Referring to FIG. 12B, the molding member 450 may include a removal portion 451 formed in a region corresponding to the fourth portion 450b corresponding to a region in which the first conductive portion 310 has a relatively high current density. In an embodiment, the removal portion 451 may include a first removal portion 451a and a second removal portion 451b spaced apart from the first removal portion 451a. In an embodiment, in the fourth portion 450b, a portion 450c between the first removal portion 451a and the second removal portion 451b, which are spaced apart from each other, may be formed to have an original thickness substantially the same as that of the third portion 450a, thereby helping protect the bent portion 432 and strengthen adhesive force. In some embodiments, the removal portion 451 may be divided into three or more removal portions spaced apart from each other at a predetermined interval in the fourth portion 450b. In some embodiments, the removal portion 451 may be divided into a plurality of cutting portions through the third portion 450a and the fourth portion 450b corresponding to an entire length of the molding member 450.

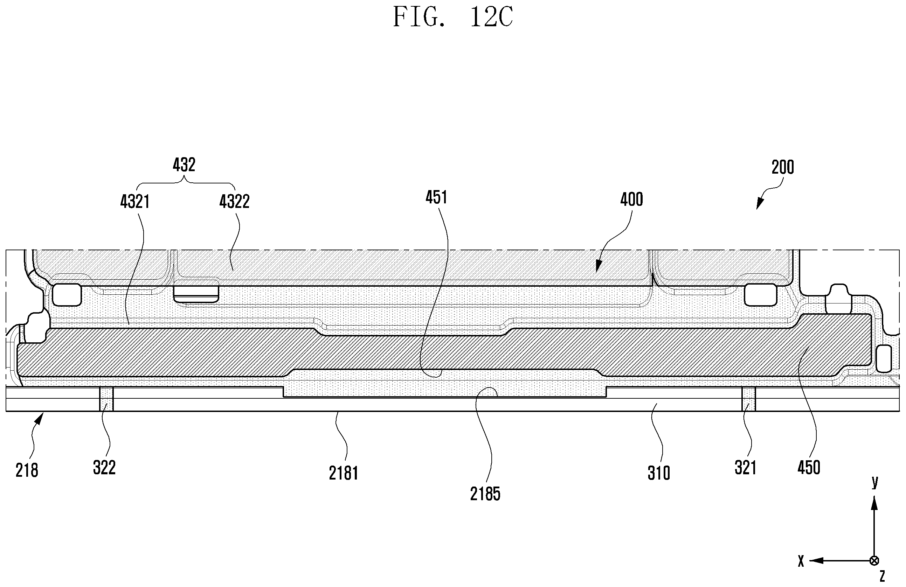

Referring to FIG. 12C, the electronic device 200 may include a cutting portion 2185 formed in a second portion (e.g., the second portion 310b of FIG. 11C) having a relatively high current density in the first conductive portion 310, and a removal portion 451 formed in a fourth portion (e.g., the fourth portion 450b of FIG. 12B) of the molding member 450 corresponding to the second portion 310b. In an embodiment, through a face-to-face arrangement structure of the cutting portion 2185 and the removal portion 451, when the first conductive portion 310 operates as an antenna, a separation distance between the first conductive portion 310 and the molding member 450 may be increased, thereby reducing a coupling effect with the bent portion 432 through the molding member 450 and helping reduce performance degradation of the antenna. In some embodiments, the cutting portion 2185 may be divided into at least two cutting portions 2185a and 2185b as illustrated in FIG. 11C, and/or the removal portion 451 may be divided into at least two removal portions 451a and 451b as illustrated in FIG. 12B.

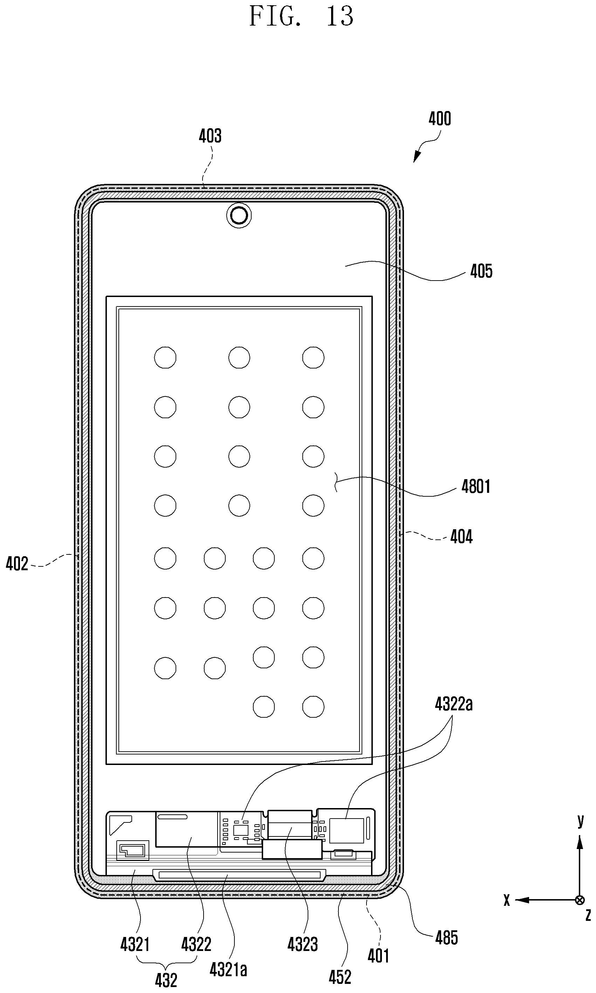

FIG. 13 is a view illustrating a rear surface of a display according to various embodiments of the disclosure.

In describing the display 400 of FIG. 13, the same reference numerals are assigned to components substantially identical to those of the display 400 of FIG. 5B, and a detailed description thereof may be omitted.

Referring to FIG. 13, the display 400 may include a molding member 452 disposed along edges 401, 402, 403, and 404 of the display 400. In an embodiment, the molding member 452 may be disposed to cover the fourth edge 404 from the first edge 401 via the second and third edges 402 and 403, and may form a closed-loop waterproof space 4801. In an embodiment, the display 400 may include a closed-loop adhesive member 485 attached along the molding member 452. In an embodiment, the display 400 may be disposed to be supported by an extension member 2181a and attached via the adhesive member 485 disposed between the molding member 452 and the extension member (e.g., the extension member 2181a of FIG. 3) of an electronic device (e.g., the electronic device 200 of FIG. 3).

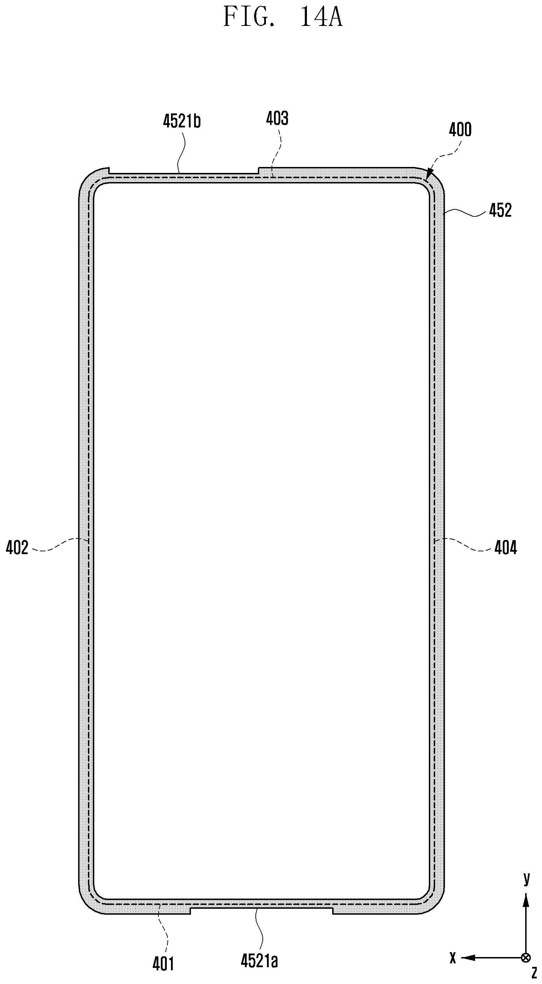

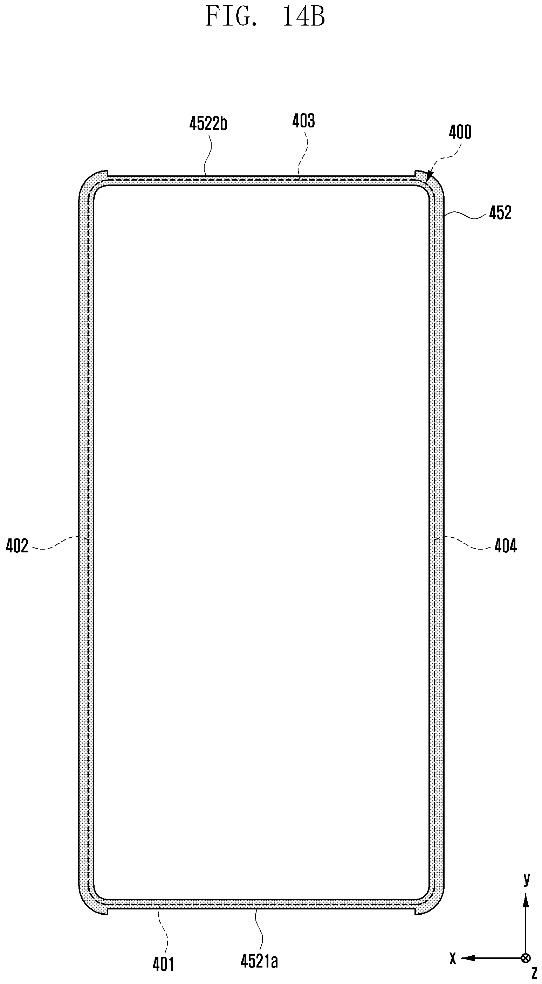

FIGS. 14A to 14D are views illustrating a configuration of the molding member of FIG. 13 according to antenna arrangements according to various embodiments of the disclosure.

According to various embodiments, the molding member 452 disposed in a closed-loop shape along the edges 401, 402, 403, and 404 of the display 400 illustrated in FIG. 13 may include removal portions at least partially removed or omitted according to an arrangement structure of conductive portions (e.g., the conductive portions 310, 311, 312, 313, 314, and 315 of FIG. 4) and/or non-conductive portions (e.g., the non-conductive portions 321, 322, 323, 324, 325, 326, and 327 of FIG. 4) of a side surface member used as an antenna (e.g., the side surface member 218 of FIG. 4), thereby increasing a separation distance between conductive portions used as antennas (e.g., some of the conductive portions 310, 311, 312, 313, 314, and 315 of FIG. 4) and a conductive structure of the display 400 (e.g., a bent portion (e.g., the bent portion 432 of FIG. 7) and/or a conductive sheet (e.g., the conductive sheet 443 of FIG. 7)), so as to reduce deterioration in radiation performance of the antenna.

Referring to FIG. 14A, the molding member 452 may include, near the first edge 401 of the display 400, a first removal portion 4521a (e.g., the removal portion 451 of FIG. 12A) disposed in a region at least partially corresponding to the first conductive portion (e.g., the first conductive portion 310 of FIG. 4) disposed on the first side surface (e.g., the first side surface 2181 of FIG. 4) of a side surface member (e.g., the side surface member 218 of FIG. 4), and a second removal portion 4521b (e.g., the removal portion 451 of FIG. 12A) disposed in a region at least partially corresponding to the fourth conductive portion (e.g., the third conductive portion 313 of FIG. 4) disposed on the third side surface (e.g., the third side surface 2183 of FIG. 4) of the side surface member (e.g., the side surface member 218 of FIG. 4). In an embodiment, the first removal portion 4521a and the second removal portion 4521b may be disposed in corresponding regions of the molding member 452 corresponding to portions of the first conductive portion 310 and the fourth conductive portion 313, which have relatively high current densities and are used as antennas.

Referring to FIG. 14A, the molding member 452 may include, near the first edge 401 of the display 400, a first removal portion 4522a (e.g., the removal portion 451 of FIG. 12A) disposed in a region at least partially corresponding to the first conductive portion (e.g., the first conductive portion 310 of FIG. 4) disposed on the first side surface (e.g., the first side surface 2181 of FIG. 4) of a side surface member (e.g., the side surface member 218 of FIG. 4), and a second removal portion 4522b (e.g., the removal portion 451 of FIG. 12A) disposed in a region at least partially corresponding to the fourth conductive portion (e.g., the third conductive portion 313 of FIG. 4) and the fifth conductive portion (e.g., the fifth conductive portion 314 of FIG. 4) disposed on the third side surface (e.g., the third side surface 2183 of FIG. 4) of the side surface member (e.g., the side surface member 218 of FIG. 4). In an embodiment, the first removal portion 4522a and the second removal portion 4522b may be disposed in corresponding regions of the molding member 452 corresponding to portions of the first conductive portion 310, the fourth conductive portion 313, and the fifth conductive portion 314, which have relatively high current densities and are used as antennas.

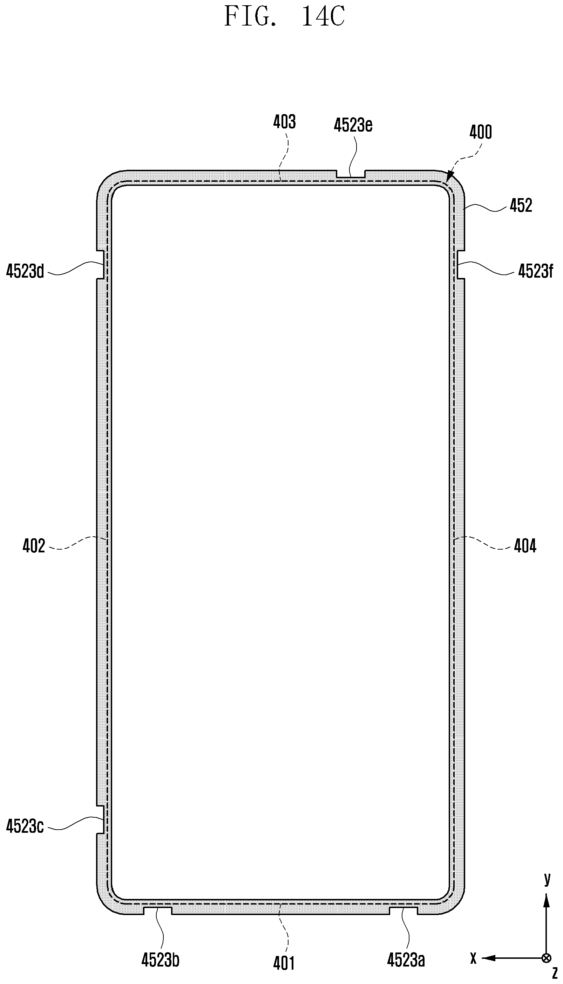

Referring to FIG. 14C, the molding member 452 may include a first removal portion 4523a, a second removal portion 4523b, a third removal portion 4523c, a fourth removal portion 4523d, a fifth removal portion 4523e, and/or a sixth removal portion 4523f disposed in regions corresponding to non-conductive portions (e.g., the first, second, third, fourth, fifth, and sixth non-conductive portions 321, 322, 323, 324, 325, and 326 of FIG. 4) of a side surface member (e.g., the side surface member 218 of FIG. 4). In an embodiment, the first, second, third, fourth, fifth, and sixth removal portions 4523a, 4523b, 4523c, 4523d, 4523e, and 4523f (e.g., the removal portion 451 of FIG. 12A) may be disposed in corresponding regions of the molding member 452 corresponding to portions of conductive portions (e.g., the first, second, third, fourth, fifth, and sixth conductive portions 310, 311, 312, 313, 314, 315, and 316 of FIG. 4) having relatively high current densities in a side surface member (e.g., the side surface member 218 of FIG. 4) used as antennas.

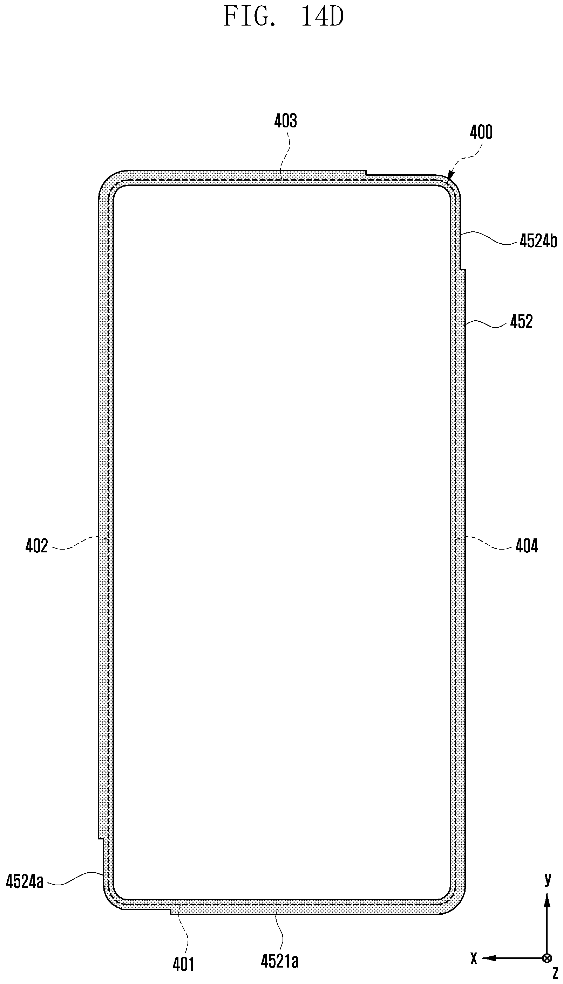

Referring to FIG. 14D, the molding member 452 may include a first removal portion 4524a (e.g., the removal portion 451 of FIG. 12A) disposed in a region at least partially corresponding to a second conductive portion (e.g., the second conductive portion 311 of FIG. 4) disposed at a corner portion connected from a portion of the first side surface (e.g., the first side surface 2181 of FIG. 4) of a side surface member (e.g., the side surface member 218 of FIG. 4) to a portion of the second side surface (e.g., the second side surface 2182 of FIG. 4), near a corner connecting the first edge 401 and the second edge of the display 400, and/or a second removal portion 4524b (e.g., the removal portion 451 of FIG. 12A) disposed in a region at least partially corresponding to a fifth conductive portion (e.g., the fifth conductive portion 314 of FIG. 4) disposed at a corner portion connected from a portion of the third side surface (e.g., the third side surface 2183 of FIG. 4) of the side surface member (e.g., the side surface member 218 of FIG. 4) to a portion of the fourth side surface (e.g., the fourth side surface 2184 of FIG. 4). In an embodiment, the first removal portion 4524a and the second removal portion 4524b may be disposed in corresponding regions of the molding member 452 corresponding to portions of the second conductive portion 312 and the fifth conductive portion 314, which have relatively high current densities and are used as antennas.

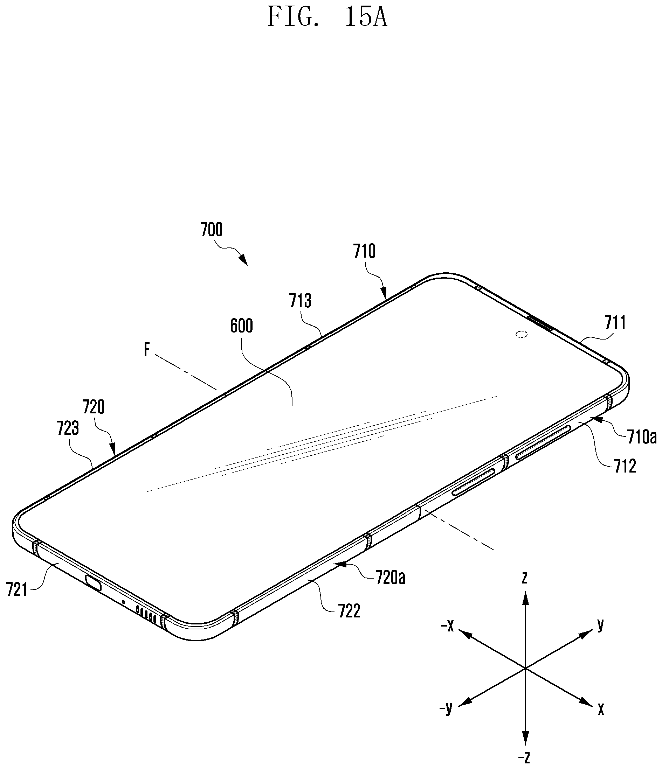

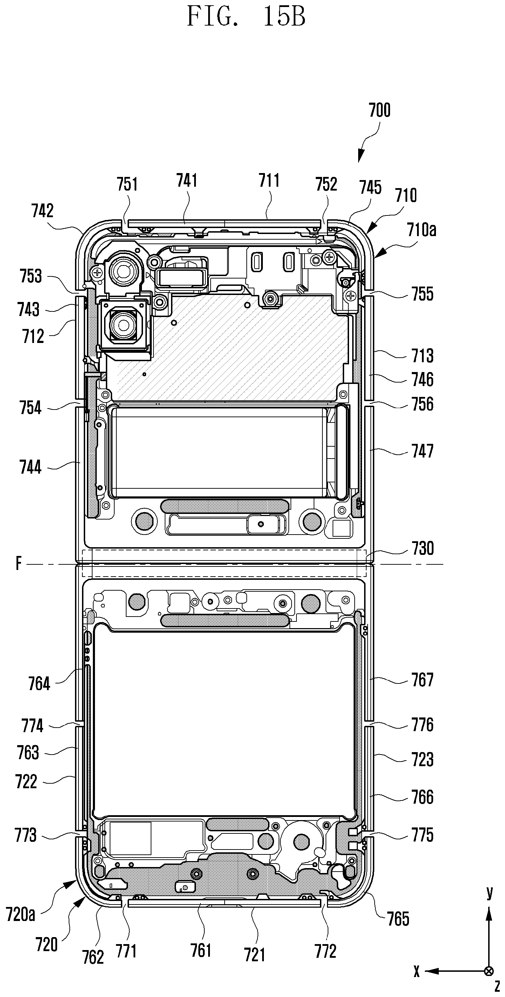

FIG. 15A is a perspective view of an electronic device according to various embodiments of the disclosure. FIG. 15B is a view illustrating a configuration of an electronic device including conductive portions used as an antenna according to various embodiments of the disclosure.

The electronic device 700 of FIG. 15A may be at least partially similar to the electronic device 100 of FIG. 1, or may further include another embodiment of an electronic device.

Referring to FIGS. 15A and 15B, the electronic device 700 may include a first housing 710 and a second housing 720 foldably coupled to the first housing 710 via a hinge device 730. In an embodiment, the electronic device 700 may include a flexible display 600 disposed to be supported by the first housing 710 and the second housing 720 and bent together according to a folding operation. In an embodiment, the first housing 710 may include a first side surface member 710a including a first side surface 711, a second side surface 712 extending in a perpendicular direction from one end of the first side surface 711, and a third side surface 713 extending in a perpendicular direction from the other end of the first side surface 711 and disposed parallel to the second side surface 712. In an embodiment, the second housing 720 may include a second side surface member 720a including a fourth side surface 721, a fifth side surface 722 extending in a perpendicular direction from one end of the fourth side surface 721 and disposed in line with the second side surface 712, and a sixth side surface 723 extending in a perpendicular direction from the other end of the fourth side surface 721 and disposed in line with the third side surface 713. In an embodiment, the first side surface member 710a and the second side surface member 720a may be at least partially formed of a conductive material (e.g., a metal material).

According to various embodiments, the first housing 710 may include a first conductive portion 741 disposed in a portion of the first side surface 711 of the first side surface member 710a, a second conductive portion 742 disposed in a portion of the first side surface 711 and a portion of the second side surface 712, a third conductive portion 743 disposed in a portion of the second side surface 712, a fourth conductive portion 744 disposed in a portion of the second side surface 712, a fifth conductive portion 745 disposed in a portion of the first side surface 711 and a portion of the third side surface 713, a sixth conductive portion 746 disposed in a portion of the third side surface 713, and/or a seventh conductive portion 747 disposed in a portion of the third side surface 713. In an embodiment, the first housing 710 may include a first segmentation portion 751 positioned between the first conductive portion 741 and the second conductive portion 742, a second segmentation portion 752 positioned between the first conductive portion 741 and the fifth conductive portion 745, a third segmentation portion 753 positioned between the second conductive portion 742 and the third conductive portion 743, a fourth segmentation portion 754 positioned between the third conductive portion 743 and the fourth conductive portion 744, a fifth segmentation portion 755 positioned between the fifth conductive portion 745 and the sixth conductive portion 746, and/or a sixth segmentation portion 756 positioned between the sixth conductive portion 746 and the seventh conductive portion 747.

According to various embodiments, the second housing 720 may include an eighth conductive portion 761 disposed in a portion of the fourth side surface 721 of the second side surface member 720a, a ninth conductive portion 762 disposed in a portion of the fourth side surface 721 and a portion of the fifth side surface 722, a tenth conductive portion 763 disposed in a portion of the fifth side surface 722, an eleventh conductive portion 764 disposed in a portion of the fifth side surface 722, a twelfth conductive portion 765 disposed in a portion of the fourth side surface 721 and a portion of the sixth side surface 723, a thirteenth conductive portion 766 disposed in a portion of the sixth side surface 723, and/or a fourteenth conductive portion 767 disposed in a portion of the sixth side surface 723. In an embodiment, the second housing 720 may include a seventh segmentation portion 771 positioned between the eighth conductive portion 761 and the ninth conductive portion 762, an eighth segmentation portion 772 positioned between the eighth conductive portion 761 and the twelfth conductive portion 765, a ninth segmentation portion 773 positioned between the ninth conductive portion 762 and the tenth conductive portion 763, a tenth segmentation portion 774 positioned between the tenth conductive portion 763 and the eleventh conductive portion 764, an eleventh segmentation portion 775 positioned between the twelfth conductive portion 765 and the thirteenth conductive portion 766, and/or a twelfth segmentation portion 776 positioned between the thirteenth conductive portion 766 and the fourteenth conductive portion 767. In an embodiment, the first segmentation portion 751, the second segmentation portion 752, the third segmentation portion 753, the fourth segmentation portion 754, the fifth segmentation portion 755, and the sixth segmentation portion 756 formed in the first housing 710 may be formed at positions respectively corresponding to the seventh segmentation portion 771, the eighth segmentation portion 772, the ninth segmentation portion 773, the tenth segmentation portion 774, the eleventh segmentation portion 775, and the twelfth segmentation portion 776 formed in the second housing 720 when the electronic device 700 is in a folded state.

According to various embodiments, at least one conductive portion among the plurality of conductive portions 741, 742, 743, 744, 745, 746, and 747 disposed in the first housing and at least one conductive portion among the plurality of conductive portions 761, 762, 763, 764, 765, 766, and 767 disposed in the second housing may operate as antennas by being electrically connected to a wireless communication circuit (e.g., the wireless communication module 192 of FIG. 1) disposed in the electronic device 700.

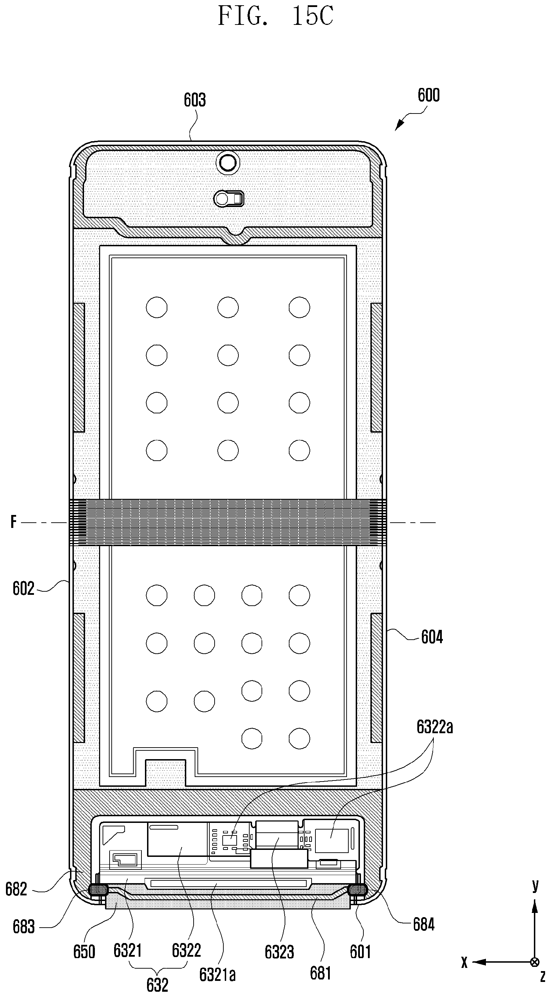

FIG. 15C is a view illustrating a rear surface of the flexible display of FIG. 15A according to various embodiments of the disclosure.

Referring to FIG. 15C, the flexible display 600 may include a first edge 601, a second edge 602 extending in a perpendicular direction from the first edge 601, a third edge 603 extending from the second edge 602 in a direction parallel to the first edge 601, and a fourth edge 604 extending from the third edge 603 to the first edge 601. In an embodiment, the first edge 601 may be disposed at a position corresponding to the fourth side surface (e.g., the fourth side surface 721 of FIG. 15A) of the second housing (e.g., the second housing 720 of FIG. 15A). In an embodiment, the second edge 602 may be disposed at a position corresponding to the second side surface (e.g., the second side surface 712 of FIG. 15A) of the first housing (e.g., the first housing 710 of FIG. 15A) and the fifth side surface (e.g., the fifth side surface 722 of FIG. 15A) of the second housing (e.g., the second housing 720 of FIG. 15A). In an embodiment, the third edge 603 may be disposed at a position corresponding to the first side surface (e.g., the first side surface 711 of FIG. 15A) of the first housing (e.g., the first housing 710 of FIG. 15A). In an embodiment, the fourth edge 604 may be disposed at a position corresponding to the third side surface (e.g., the third side surface 713 of FIG. 15A) of the first housing (e.g., the first housing 710 of FIG. 15A) and the sixth side surface (e.g., the sixth side surface 723 of FIG. 15A) of the second housing (e.g., the second housing 720 of FIG. 15A).

According to various embodiments, the flexible display 600 may include a bent portion 632 disposed, at the first edge 601, to be folded from a display panel (not illustrated) toward at least a portion of the rear surface (e.g., in the -z-axis direction) of the flexible display 600. In an embodiment, the bent portion 632 may include an extension portion 6321 extending from the display panel and including a control circuit 6321a, and a flexible substrate 6322 electrically connected to the extension portion 6321 and including a plurality of electric elements 6322a. In an embodiment, the flexible display 600 may include an FPCB connecting portion 6323 (e.g., a connector) extending from the flexible substrate 6322 and electrically connected to a substrate of an electronic device (e.g., the electronic device 700 of FIG. 15A).

According to various embodiments, the flexible display 600 may include a molding member 650 disposed at the first edge 601 to cover at least a portion of the bent portion 632. In an embodiment, the molding member 650 may be disposed to be close to the fourth side surface 721 of the second housing 720. In an embodiment, the electronic device 700 may include a first adhesive member 681 disposed between the molding member 650 and the second side surface member 720a, a second adhesive member 682 disposed in the second housing 720 to surround the control circuit 6321a, and third and fourth adhesive members 683 and 684 (e.g., CIPGs) connecting opposite ends of the second adhesive member 682 to opposite ends of the first adhesive member 681.

According to various embodiments, an eighth conductive portion (e.g., the eighth conductive portion 761 of FIG. 15B) disposed on a fourth side surface (e.g., the fourth side surface 721 of FIG. 15A) and used as an antenna may be disposed to be coupled to the bent portion 632 via the molding member 650 and/or the first adhesive member 681, and thus radiation performance may be deteriorated.

According to exemplary embodiments of the disclosure, the eighth conductive portion 761 used as an antenna may help reduce deterioration in radiation performance of the antenna by increasing a separation distance between the eighth conductive portion 761 and the molding member 650 through a cutting portion (e.g., the cutting portion 2185 of FIG. 7) formed on the inner surface of the eighth conductive portion 761 of the fourth side surface 721 and/or a removal portion (e.g., the removal portion 451 of FIG. 12A) of the molding member 650. For example, a separation structure between the molding member 650 and the eighth conductive portion 761 according to an embodiment of the disclosure and/or a separation structure between a plurality of conductive portions (e.g., the conductive portions 741, 742, 743, 744, 745, 746, 761, 762, 763, 764, 765, 766, and 767 of FIG. 15B) and the molding member 650 disposed along at least some edges of the flexible display 600 may be substantially the same as a separation structure between the molding members 450, 451, and 452 of FIGS. 5A to 14D described above and conductive portions (e.g., the conductive portions 310, 311, 312, 313, 314, and 315 of FIG. 4).

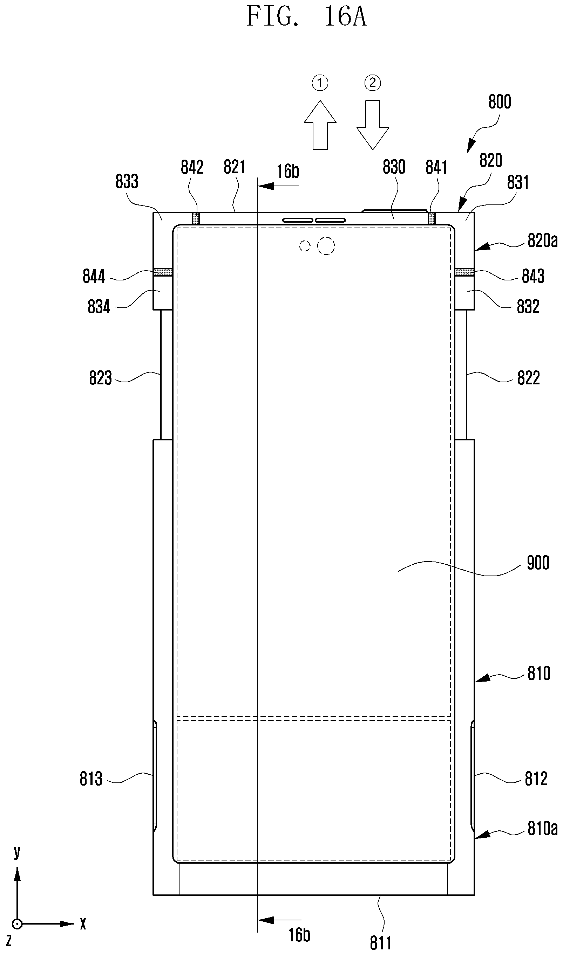

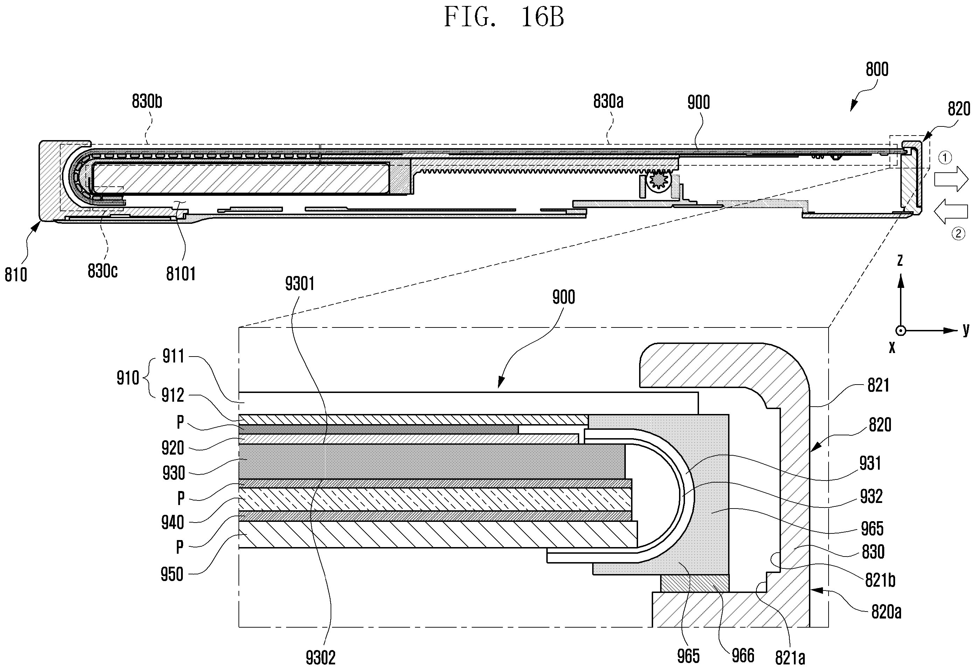

FIG. 16A is a view illustrating a configuration of an electronic device according to various embodiments of the disclosure. FIG. 16B is a cross-sectional view of an electronic device according to various embodiments of the disclosure taken along line 16b-16b of FIG. 16A.

The electronic device 800 of FIGS. 16A and 16B may be at least partially similar to the electronic device 100 of FIG. 1, or may further include another embodiment of an electronic device.

Referring to FIGS. 16A and 16B, the electronic device 800 may include a first housing 810 and a second housing 820 coupled to the first housing 810 to be slidable in a predetermined direction by a predetermined reciprocating distance. In an embodiment, the electronic device 800 may include a flexible display 900 fixed to at least a portion of the second housing 820 and having a variable display area by being slid in or slid out into or from an inner space 8101 of the first housing 810 according to a sliding operation of the second housing 820. For example, the flexible display 900 may have a first display area in a state in which the second housing 820 is slid out from the first housing 810 in a first direction (e.g., direction ①). In an embodiment, the flexible display 900 may have a second display area smaller than the first display area in a state in which the second housing 820 is slid in in a second direction (e.g., direction ②) opposite to the first direction (e.g., direction ①).

According to various embodiments, the first housing 810 may include a first side surface member 810a including a first side surface 811, a second side surface 812 extending in a perpendicular direction from one end of the first side surface 811, and a third side surface 813 extending in a perpendicular direction from the other end of the first side surface 811. In an embodiment, the second housing 820 may include a second side surface member 820a including a fourth side surface 821 extending in a direction parallel to the first side surface 811, a fifth side surface 822 extending from one end of the fourth side surface 821 so as to at least partially face the second side surface 812, and a sixth side surface 823 extending from the other end of the fourth side surface 821 so as to at least partially face the third side surface 813. In an embodiment, the second side surface member 820a may be formed at least partially of a conductive material (e.g., metal). In an embodiment, the second side surface member 820a may include a first conductive portion 830 disposed through a first non-conductive portion 841 and a second non-conductive portion 842 spaced apart from each other on the fourth side surface 821, a second conductive portion 831 disposed through the first non-conductive portion 841 and a third non-conductive portion 843 disposed on the fifth side surface 822, a third conductive portion 832 disposed on another portion of the fifth side surface 822 through the third non-conductive portion 843, a fourth conductive portion 833 disposed through the second non-conductive portion 842 and a fourth non-conductive portion 844 disposed on the sixth side surface 823, and a fifth conductive portion 834 disposed on another portion of the sixth side surface 823 through the fourth non-conductive portion 844. In an embodiment, at least one conductive portion among the first, second, third, fourth, and fifth conductive portions 830, 831, 832, 833, and 834 may be electrically connected to a wireless communication circuit (e.g., the wireless communication module 192 of FIG. 1) of the electronic device 800 and may operate as an antenna.

According to various embodiments, the flexible display 900 may include a window layer 910 stacked on a first surface 9301 of a display panel 930 via an adhesive member P, and a polarizer 920, a polymer layer 940, and/or a conductive sheet 950 sequentially disposed on a second surface 9302 of the display panel 930 opposite to the first surface 9301 and attached via the adhesive member P. In an embodiment, the window layer 910 may include a first layer 911 formed of a polymer (e.g., a PET layer or a TPU layer) and a second layer 912 disposed below the first layer 911 and formed of glass (e.g., a UTG layer). In some embodiments, the polarizer 920 may be omitted.

According to various embodiments, the flexible display 900 may include a first flat region 830a fixed to the second housing 820, a bent region 830b extending from the first flat region 830a, exposed to be visible from outside in the slide-out state, and slid in into the inner space 8101 of the first housing 810 through a bending operation in the slide-in state so as not to be visible from outside, and a second flat region 830c extending from the bent region 830b and positioned in the inner space 8101 of the first housing 810 without always being exposed to the outside. In an embodiment, the flexible display 900 may include a bent portion 932 (e.g., a chip on plastic (COP) or a chip on film (COF)) extending from an end of the first flat region 830a and disposed to be curved toward the rear surface of the flexible display 900. In an embodiment, the bent portion 932 may be protected through a bent portion protection layer 931.

According to various embodiments, the electronic device 800 may include a molding member 965 disposed to cover the bent portion 932 disposed at an end of the first flat region 830a of the flexible display 900. In an embodiment, the molding member 965 may be attached to at least a portion of the second side surface member 820a via an adhesive member 966. In this case, the first conductive portion 830 of the second side surface member 820a used as an antenna may cause unintended coupling with the bent portion 932 and deteriorate radiation performance of the antenna because the inner surface 821a of the fourth side surface 821 is disposed close to the molding member 965.

According to exemplary embodiments of the disclosure, the electronic device 800 may include a cutting portion 821b formed lower than the inner surface 821a of the fourth side surface 821 of the second side surface member 820a in a region corresponding to the molding member 965, and may help reduce deterioration in radiation performance of the antenna through reduction of coupling between the second side surface member 820a and the bent portion 932 by relatively increasing the distance between the molding member 965 and the inner surface 821a.

According to various embodiments, the electronic device may include a housing (e.g., the housing 210 of FIG. 2A) including at least one conductive portion (e.g., the first conductive portion 310 of FIG. 4) forming at least a portion of a side surface (e.g., the first side surface 2181 of FIG. 4), a display (e.g., the display 400 of FIG. 2A) disposed to be visible from outside through at least a portion of the housing. The display may include a display panel (e.g., the display panel 431 of FIG. 7), an extension portion (e.g., the extension portion 4321 of FIG. 7) extending from the display panel at a position corresponding to the at least one conductive portion and disposed to be folded toward a rear surface of the display, and display a control circuit (e.g., the control circuit 4321a of FIG. 5B) disposed on the extension portion. The electronic device may further include a molding member (e.g., the molding member 450 of FIG. 7) disposed to cover at least a portion of the extension portion, and a wireless communication circuit (e.g., the wireless communication circuit 192 of FIG. 1) configured to transmit or receive a wireless signal through the at least one conductive portion. The molding member may be disposed to be spaced apart from the at least one conductive portion.

According to various embodiments, the molding member may be disposed to cover the display control circuit.

According to various embodiments, the at least one conductive portion may include at least one cutting portion (e.g., the cutting portion 2185 of FIG. 7) formed at least partially lower than an inner surface (e.g., the inner surface 218a of FIG. 7) of the at least one conductive portion.

According to various embodiments, the cutting portion may be formed at a position at least partially overlapping the molding member when the side surface is viewed from outside.

According to various embodiments of the disclosure, the cutting portion may have a length equal to that of the at least one conductive portion.

According to various embodiments, the cutting portion may have a length smaller than that of the at least one conductive portion.

According to various embodiments, a length and/or a position of the cutting portion may be determined based on a current density of the at least one conductive portion.

According to various embodiments, a length and/or a position of the cutting portion may be determined in consideration of rigidity of the at least one conductive portion.

According to various embodiments, the housing may include a side surface member (e.g., the side surface member 218 of FIG. 7) including the at least one conductive portion, and an extension member (e.g., the extension member 2181a of FIG. 7) extending from the side surface member into an inner space of the housing, and at least a portion of the display may be disposed to be supported by the extension member.

According to various embodiments, at least a portion of the display may be attached to the molding member via an adhesive member (e.g., the first adhesive member 481 of FIG. 7).

According to various embodiments, the adhesive member may be disposed at a position at least partially overlapping the molding member when the display is viewed from above.

According to various embodiments, the molding member may include at least one first portion (e.g., the third portion 450a of FIG. 12A) having a first separation distance from the at least one conductive portion, and at least one second portion (e.g., the fourth portion 450b of FIG. 12A) disposed to have a second separation distance from the at least one conductive portion, the second separation distance being greater than the first separation distance.

According to various embodiments, a position of the at least one second portion may be determined based on a current density of the at least one conductive portion.

According to various embodiments, a separation distance between the at least one conductive portion and the molding member may be 0.25 mm or more.

According to various embodiments, the housing may include a first housing (e.g., the first housing 710 of FIG. 15A) and a second housing (e.g., the second housing 720 of FIG. 15A) foldably coupled to the first housing via a hinge device (e.g., the hinge device 730 of FIG. 15B), the display (e.g., the flexible display 600 of FIG. 15A) may be foldably disposed to be supported by the first housing and the second housing, and the at least one conductive portion (e.g., the eighth conductive portion 761 of FIG. 15B) may be disposed on at least a portion of a side surface of the first housing and/or at least a portion of a side surface (e.g., the fourth side surface 721 of FIG. 15B) of the second housing.

According to various embodiments, the housing may include a first housing (e.g., the first housing 810 of FIG. 16A) and a second housing (e.g., the second housing 820 of FIG. 16A) slidably coupled to the first housing, the display (e.g., the flexible display 900 of FIG. 16A) may be accommodated, in a slide-in state, at least partially in an inner space (e.g., the inner space 8101 of FIG. 16B) of the first housing so as not to be visible from outside, and the at least one conductive portion (e.g., the first conductive portion 830 of FIG. 16A) may be disposed on at least a portion of a side surface of the first housing or at least a portion of a side surface (e.g., the fourth side surface 821 of FIG. 16A) of the second housing.

According to various embodiments, the electronic device may include a housing (e.g., the housing 210 of FIG. 2A) including at least one conductive portion (e.g., the first non-conductive portion 310, the second non-conductive portion 311, the third non-conductive portion 312, the fourth non-conductive portion 313, the fifth non-conductive portion 314, and the fifth non-conductive portion 315 of FIG. 4) forming at least a portion of a side surface (e.g., the first side surface 2181, the second side surface 2182, the third side surface 2183, and the fourth side surface 2184 of FIG. 4), a display (e.g., the display 400 of FIG. 7) disposed to be visible from outside through at least a portion of the housing and including a display panel (e.g., the display panel 431 of FIG. 7) and a conductive sheet (e.g., the conductive sheet 443 of FIG. 7) disposed below the display panel, a molding member (e.g., the molding member 450 of FIG. 7 or the molding member 452 of FIG. 14A) disposed to cover at least one edge of the display (e.g., the first edge 401, the second edge 402, the third edge 403, and the fourth edge 404 of FIG. 5A), and a wireless communication circuit (e.g., the wireless communication module 192 of FIG. 1) configured to transmit or receive a wireless signal through the at least one conductive portion. The molding member may be disposed to have a predetermined separation distance from an inner surface of the at least one conductive portion.

According to various embodiments, the at least one conductive portion (e.g., the first conductive portion 310 of FIG. 4) may include at least one cutting portion (e.g., the cutting portion 2185 of FIG. 7) formed at least partially lower than the inner surface (e.g., the inner surface 218a of FIG. 7).

According to various embodiments, a length and/or a position of the cutting portion may be determined based on a current density of the at least one conductive portion.

According to various embodiments, the molding member (e.g., the molding member 450 of FIG. 7) may include at least one first portion (e.g., the third portion 450a of FIG. 12A) having a first separation distance from the at least one conductive portion (e.g., the first conductive portion 310 of FIG. 4), and at least one second portion (e.g., the fourth portion 450b of FIG. 12A) disposed to have a second separation distance from the at least one conductive portion, the separation distance including the second separation distance. The position of the at least one second portion may be determined based on a current density of the at least one conductive portion.

In addition, the embodiments of the disclosure disclosed in the specification and the drawings merely present specific examples in order to easily explain the technical features according to the embodiments of the disclosure and to aid understanding of the embodiments of the disclosure, and are not intended to limit the scope of the embodiments of the disclosure. Accordingly, the scope of the various embodiments of the disclosure should be construed as including, in addition to the embodiments disclosed herein, all changes or modified forms derived based on the technical spirit of the various embodiments of the disclosure.

## Claims

1. An electronic device comprising:
a housing (210) comprising at least one conductive portion (310) forming at least a portion of a side surface (2181);
a display (400) disposed to be visible from outside through at least a portion of the housing, the display comprising
a display panel (431),
an extension portion (4321) extending from the display panel at a position corresponding to the at least one conductive portion and disposed to be folded toward a rear surface of the display, and
a display control circuit (4321a) disposed on the extension portion;
a molding member (450) disposed to cover at least a portion of the extension portion; and
a wireless communication circuit (192) configured to transmit or receive a wireless signal through the at least one conductive portion,
wherein the molding member is disposed to be spaced apart from the at least one conductive portion.

2. The electronic device of claim 1, wherein the molding member is disposed to cover the display control circuit.

3. The electronic device of claim 1, wherein the at least one conductive portion comprises at least one cutting portion (2185) formed at least partially lower than an inner surface (218a) of the at least one conductive portion.

4. The electronic device of claim 3, wherein the cutting portion is formed at a position at least partially overlapping the molding member when the side surface is viewed from outside.

5. The electronic device of claim 3, wherein the cutting portion has a length equal to a length of the at least one conductive portion.

6. The electronic device of claim 3, wherein the cutting portion has a length smaller than a length of the at least one conductive portion.

7. The electronic device of claim 3, wherein a length and/or a position of the cutting portion is determined based on a current density of the at least one conductive portion.

8. The electronic device of claim 3, wherein a length and/or a position of the cutting portion is determined in consideration of rigidity of the at least one conductive portion.

9. The electronic device of claim 1, wherein the housing comprises a side surface member (218) comprising the at least one conductive portion, and an extension member (2181a) extending from the side surface member into an inner space of the housing, and
wherein at least a portion of the display is disposed to be supported by the extension member.

10. The electronic device of claim 9, wherein at least a portion of the display is attached to the molding member via an adhesive member (481).

11. The electronic device of claim 10, wherein the adhesive member is disposed at a position at least partially overlapping the molding member when the display is viewed from above.

12. The electronic device of claim 1, wherein the molding member comprises:
at least one first portion (450a) having a first separation distance from the at least one conductive portion; and
at least one second portion (450b) disposed to have a second separation distance from the at least one conductive portion, the second separation distance being greater than the first separation distance.

13. The electronic device of claim 12, wherein a position of the at least one second portion is determined based on a current density of the at least one conductive portion.

14. The electronic device of claim 1, wherein a separation distance between the at least one conductive portion and the molding member is 0.25 mm or more.

15. The electronic device of claim 1, wherein the housing comprises:
a first housing (710); and
a second housing (720) foldably coupled to the first housing via a hinge device (730),
wherein the display (600) is foldably disposed to be supported by the first housing and the second housing, and
wherein the at least one conductive portion (761) is disposed on at least a portion of a side surface of the first housing and/or at least a portion of a side surface (721) of the second housing.
